# EUROPEAN PATENT APPLICATION

(11) **EP 2 857 186 A2**
(43) Date of publication of application: **08.04.2015**
(21) Application number: 14184219.5
(22) Date of filing: 10.09.2014
(51) Int. Cl.: B29D 99/00, B29C 70/08, B29C 33/76

(54) **Method for manufacturing a fibre composite component, fibre composite component, and structural component for an aircraft or spacecraft**

(30) Priority: 16.09.2013 DE 102013218520
(71) Applicant: Airbus Operations GmbH, 21129 Hamburg (DE)
(72) Inventor: Joern, Paul, 21129 Hamburg (DE)
(74) Representative: Isarpatent

(57) **Abstract**

The invention relates to a method for manufacturing a fibre composite component comprising a skin portion and a backing structure. Initially, a single-piece foam body or the parts of a multi-part foam body, which comprises at least one recess which is open towards a first side of the foam body, are prepared and positioned. Prior to, during or after the positioning of the foam body or the parts thereof, a rigidifying element for the backing structure or a preform or first semi-finished product for forming the rigidifying element is arranged in the recess at least in portions. A skin portion or a second semi-finished product for forming the skin portion is provided, and brought into contact, in regions, with the foam body on the first side thereof and with the rigidifying element or preform or first semi-finished product, causing the skin portion or second semi-finished product to be placed against the foam body at least in portions and the rigidifying element or preform or first semi-finished product to be positioned relative to the skin portion or second semi-finished product. The skin portion or second semi-finished product and the rigidifying element or preform or first semi-finished product in contact therewith are processed further in such a way that a fibre composite component is obtained in which the skin portion and the rigidifying element are interconnected. The invention additionally relates to a fibre composite component and to a structural component for an aircraft or spacecraft.

## Description

### FIELD OF THE INVENTION

The invention relates to a method for manufacturing a fibre composite component, which is formed in particular as a structural component for an aircraft or spacecraft. The invention further relates to a fibre composite component manufactured by this method. The invention further relates to a structural component for an aircraft or spacecraft.

### TECHNICAL BACKGROUND

Although the present invention may be found to be useful in the manufacture of fibre composite components, and in particular of structural components, for a wide range of purposes, for example for use as a structural component in aircraft or spacecraft, land vehicles or water vehicles, the invention and the problems on which it is based are explained in greater detail using the example of a structural component for an aeroplane fuselage.

Nowadays, the fuselage of conventional large aeroplanes is generally made from aluminium in a semi-monocoque construction, in which a load-bearing aeroplane outer skin is rigidified by struts (stringers) and formers.

By contrast, in DE 10 2009 015 856 Al, a fuselage segment of an aeroplane fuselage is disclosed as a shell element in a sandwich construction which comprises an inner skin, an outer skin and a core arranged in between, line ducts for system installation being integrated into the core.

The use of fibre composite materials offers major potential for lightweight construction by comparison with the aluminium construction if the high anisotropic strengths and rigidities in the fibre direction are exploited. However, manufacturing fibre composite structural components for aeroplane fuselages is still associated with high costs even nowadays. In particular, conventionally a relatively high number of individual components are to be interconnected in a time-consuming manner. In addition, shaping devices, often complex, made of expensive materials are needed for manufacturing fibre composite components. It would be desirable to improve this situation.

### SUMMARY OF THE INVENTION

Against this background, the object of the present invention is to provide a method which makes it possible to manufacture a fibre composite component in a simpler and more cost-effective manner than conventional methods and also offers improved flexibility as regards changes in construction in the fibre composite component. In addition, a correspondingly improved fibre composite component and a correspondingly improved structural component for an aircraft or spacecraft are to be provided.

According to the invention, this object is achieved by a method having the features of claim 1 and/or by a fibre composite component having the features of claim 16 and/or by a structural component for an aircraft or spacecraft having the features of claim 17.

The following is accordingly provided:
- A method for manufacturing a fibre composite component which comprises a skin portion and a backing structure for rigidifying the skin portion. The method comprises the following steps:
   - A single-piece foam body or the parts of a multi-part foam body are prepared and positioned. In this context, the foam body comprises at least one recess which is open towards a first side of the foam body.
   - Prior to, during or after the positioning of the foam body or the parts of the foam body, a rigidifying element for the backing structure or a preform or first semi-finished product for forming the rigidifying element is arranged in the recess at least in portions. It is arranged in such a way that the rigidifying element or preform or first semi-finished product is placed against the foam body at least in portions.
   - The skin portion or a second semi-finished product for forming the skin portion is provided.
   - The skin portion or second semi-finished product is brought into contact, in regions, with the foam body on the first side thereof and with the rigidifying element or preform or first semi-finished product, causing the skin portion or second semi-finished product to be placed against the foam body at least in portions and the rigidifying element or preform or first semi-finished product to be positioned relative to the skin portion or second semi-finished product.
   - Subsequently, the skin portion or second semi-finished product and the rigidifying element or preform or first semi-finished product in contact therewith are processed further in such a way that a fibre composite component is obtained in which the skin portion and the rigidifying element are interconnected.
- A fibre composite component, in particular a structural component for an aircraft or spacecraft, which is manufactured by a method of this type.
- A structural component for an aircraft or spacecraft, which comprises a skin portion, a backing structure and a foam component and which can be manufactured in particular by a method of this type. The backing structure comprises at least one rigidifying element for rigidifying the skin portion and is arranged on a first side of the skin portion. The foam component is arranged on the first side of the skin portion and connected to the skin portion or the rigidifying element or both. In this context, the foam component is formed on a side of the foam component remote from the skin portion by material-removing processing.

The idea behind the present invention is to provide, during the manufacture of a fibre composite component, a foam body which on the one hand can be used as a means of production and on the other hand can remain in whole or in part if required for performing further functions in the fibre composite component or can alternatively be completely removed. For this purpose, a foam body having a recess formed therein is used in the method, so as to receive a rigidifying element, for the backing structure to be formed, or a preform therefor or a semi-finished product for forming the rigidifying element, preferably a plurality of rigidifying elements, preforms or semi-finished products of this type. The rigidifying element, preform or first semi-finished product can be supported by placing it against the foam body if the rigidifying element, preform or first semi-finished product is brought into contact with the skin portion or second semi-finished product for connection thereto and subsequently connected thereto, in particular under the effect of increased pressure and/or increased temperature.

The fibre composite component is thus manufactured with the aid of the foam body. High costs for providing complex devices made of special metal materials, as well as high costs and a considerable expenditure of time for adjusting a device of this type in the event of changes in construction in the fibre composite component to be produced, can be avoided. In the method according to the invention, changes to the construction can be taken into account in a simple manner at greatly reduced costs in that the shape of the foam body, or the shape of the parts thereof in the case of a multi-part foam body, are adjusted to the specifications for the next fibre composite component to be produced. For example, during this adjustment the positioning of the recess in the foam body and/or the shape of the recess can be varied. The adjustment can for example be provided by thermoforming and/or preferably by material-removing machining, for example milling, on a foam body of an initially standardised form. The foam body can thus form an interceding intermediate element, which can be manufactured comparatively rapidly and cost-effectively and which can for example be held on a device of a simple shape whilst itself being of a more complex shape adjusted to the target shape of the fibre composite component to be manufactured. If required for a corresponding configuration, a foam body of this type may also additionally be used in portions as a loose tool for shaping rigidifying elements of a complex shape.

A further advantage is that, although the foam body which is initially used as a means of production can be removed again to save on weight, it can also alternatively remain in the fibre composite component in whole or in part, where it may be useful for a wide range of tasks. In particular, in the fibre composite component, a remaining foam body or remaining regions of the foam body may form a foam component which may for example take on structural bearing functions, and/or be used as protection for the primary structure against buckling and damage, and/or provide thermal and/or acoustic insulation, and/or, if the fibre composite component is being used in the field or aviation and aerospace, be used for integrating non-structural system components and/or facing components. A remaining foam component having a structural bearing function may also make it possible to reduce the number of rigidifying elements in a backing structure.

Material-removing machining, as proposed for the structural component, makes possible an individual, time-saving and cost-sparing, flexible, weight-optimised and space-optimised configuration of the foam component remaining in the fibre composite component, meaning that this foam component, which may initially be used as a means of production, can be optimally adapted to the functions to be performed.

In the context of the present application, non-structural system components of an aircraft or spacecraft should be understood as system components which have no structural bearing function in the finished aircraft or spacecraft. Non-structural system components could for example be lines for distributing electrical power, data lines, ventilation ducts, water lines, wastewater lines, fuel lines, hydraulic lines, and further components of a power supply system, data transfer or data processing system, ventilation or air-conditioning system, water/wastewater system, fuel system or hydraulic system.

Advantageous configurations, developments and improvements of the invention may be taken from the further dependent claims and from the description with reference to the drawings.

In one configuration, at least one surface portion of the foam body on the first side thereof is shaped in a manner corresponding to a shape, predetermined for the finished fibre composite component, of a region of the skin portion. In this way, the foam body can act as a shaping tool during the formation of the skin portion.

In a further configuration, the rigidifying element is arranged in the recess of the foam body as a composite component. In this context, the composite component comprises strengthening fibres, which are embedded in an already fully solidified matrix material. In particular, when it is arranged in the recess, the rigidifying element may already be in the form of a composite component comprising strengthening fibres, for example carbon fibres, which are embedded in a completed cured matrix material, for example an epoxy resin. The rigidifying element may be prefabricated in this configuration.

In another development, a layer or a plurality of layers of a fibre formation pre-impregnated with a matrix material which is not cured or not completely cured, known as a prepreg, is arranged in the recess at least in portions as a first semi-finished product. Alternatively, the preform may be formed using a fibre formation pre-impregnated with a matrix material which is not cured or not completely cured, and be arranged in the recess at least in portions in this state. In particular, the preform may be formed using layers of a pre-impregnated fibre formation of this type. Arranging the first semi-finished product or preform in the recess when it is not cured or not completely cured has the advantage that the foam body can also act as a shaping tool during the formation of the rigidifying element. It is thus not necessary to provide a rigidifying element which has already been cured in another shaping tool, meaning that the production process can be further simplified. In addition, machining pre-impregnated fibre formations can contribute to a very high quality and a high load capacity of the finished fibre component.

In another development, a layer or a plurality of layers of a dry fibre formation are arranged in the recess at least in portions as a first semi-finished product. Alternatively, the preform may be formed using a dry fibre formation and arranged in the recess of the foam body in a dry state. In this development, the first semi-finished product or preform is soaked with a curable matrix material by injection during further processing. In this development, pre-impregnated fibre formations are not required, whilst the foam body can again be used as a shaping tool. In this case, however, suitable measures have to be taken to supply the matrix material to the dry fibre formation.

In a preferred configuration, a fibre formation pre-impregnated with a matrix material with is not cured or not completely cured is brought into contact in regions with the first side of the foam body and with the rigidifying element or preform or first semi-finished product as a second semi-finished product. This has the advantage that the skin portion does not have to be cured in a separate step and no further shaping tool is required for curing the skin portion, but instead the foam body acts as a shaping tool, the manufacturing process can be further simplified and a high-quality finished fibre composite component can be achieved.

In another development, a dry fibre formation is brought into contact in regions with the first side of the foam body and with the rigidifying element or preform or first semi-finished product as a second semi-finished product. The second semi-finished product is soaked with a curable material by injection during further processing. Providing the second semi-finished product as a dry material likewise has the advantage that the foam body can be used as a shaping tool and pre-impregnated semi-finished products are additionally not required. However, in this development it likewise has to be provided that the matrix material is supplied to the dry fibre formation.

In yet another configuration, the skin portion is provided as a composite component, which comprises reinforcing fibres embedded in a solidified, in particular cured, matrix material.

In one configuration, the further processing comprises curing the matrix material of the first semi-finished product or preform and/or curing the matrix material of the second semi-finished product. In this context, the matrix material already contained in the first semi-finished product, preform and/or second semi-finished product can be cured. If an injection method is used, the curing relates to the injected matrix material with which the respective semi-finished product or preform has been soaked. The matrix material contained in the first semi-finished product, preform and/or second semi-finished product is cured in particular under the effect of increased pressure and/or increased temperature. If both the first semi-finished product or preform and the second semi-finished product comprise matrix materials which are not cured or not completely cured, these are preferably cured simultaneously. In this way, a stable component can be produced, in which the rigidifying element and the skin portion are interconnected.

In a preferred configuration, the curing is carried out in an autoclave during further processing.

In one development, at least part of the foam body is connected, in particular glued, to the skin portion and/or rigidifying component during further processing. In a preferred variant of this development, this connection is achieved by curing the matrix material. Additional measures for solidifying the foam body are thus advantageously not required. The connection can thus be achieved in particular in that matrix material, which is not cured or not completely cured, from the first semi-finished product or preform and/or second semi-finished product penetrates into the surface of the foam body in regions and subsequently cures.

In one configuration of the method, the foam body or the parts of the foam body are arranged on a device, the arrangement on the device taking place
a) before the recess in the foam body is formed or completely formed, or
b) after the recess is completely formed and before the rigidifying element or preform or first semi-finished product is arranged in the recess at least in portions, or
c) after the rigidifying element or preform or first semi-finished product is arranged in the recess at least in portions.

In this way, the foam body or the parts thereof can advantageously be held and supported reliably in the desired position. An advantage of variant a) is that the recess is already formed, for example possibly being milled in, on the same device on which elements are arranged in the recess and on the foam body. High precision of the produced fibre composite component can be achieved with a simultaneously advantageous production process. In variant b), the foam body or the parts thereof, including the recesses, can advantageously be produced in a larger number of units in advance. In variant c), the foam body or parts thereof may be provided with recesses which are already equipped, and this can provide flexibility in the production process.

In one configuration, the device comprises a support face for the foam body, which substantially corresponds to a surface on a second side of the foam body opposite the first side and makes it possible to lay the foam body flat or the parts thereof flat on the support face. In this way, the foam body can be supported particularly well, and this may be advantageous if the step of further processing comprises a curing process at increased pressure.

In one development, the support face of the device may substantially follow an inner surface to be achieved of a fuselage segment or a portion of said surface. For example, the support face may be configured as a cylindrical face or as a portion of a cylindrical face, it being possible for the cross section of the cylinder to be circular or else to be oval or elliptical in form. However, the support face may also follow another cross section shape expedient for an aeroplane fuselage. In addition, the support face may in particular be of a tapered shape, for example so as to be able to produce fibre composite components for use in the tail region of an aeroplane fuselage. With this development, the shape of the foam body to be arranged on the support face may advantageously already be adapted to the internal shape to be created of the component to be produced and, for application in the field of aircraft construction, adapted to the internal shape to be achieved of the fuselage. This can contribute to simplifying subsequent production steps.

In an advantageous configuration, during preparation the foam body is already provided with at least one recess and/or at least one groove and/or at least one through-opening, which is suitable for receiving non-structural system components of an aircraft or spacecraft therein. In particular, the non-structural system components may be components and/or lines for power supply or data processing or data transfer or lines and/or components of a hydraulic system or an air-conditioning or ventilation system or a fuel system or a water/wastewater system. In particular, in a through-opening or groove of this type, a duct-like or pipe-like element may already be arranged for receiving one or more components and/or lines of the aforementioned types. In this way, it is possible to save on mounting devices for lines and components and to accommodate these lines/components in a compact manner.

In a development, one or more non-structural system components of an aircraft or spacecraft may already be integrated into the foam body or the parts thereof during the production of the foam body, in particular by prior insertion into recesses, grooves or through-openings of the foam body or the parts thereof or by direct embedding in the foam material of the foam body. Thus, in this development, foam body parts may be produced which are already preconfigured with system components, and this can be advantageous for the cost-effectiveness and flexibility during production. In addition, in this way system components can be integrated early on during the manufacture and integration of the structure.

In one configuration, the foam body or part thereof is provided with a separating film in regions on the surface thereof, to prevent the foam body or the part thereof from connecting to the skin portion and/or the rigidifying element, in particular being glued to the skin portion and/or the rigidifying element. In this way, it can be achieved that the foam body can if required be removed in whole or in part from the skin portion and the backing structure after the step of further processing, in particular after curing the first semi-finished product or preform and/or second semi-finished product. If part of the foam body is provided with the separating film, whilst other parts of the foam body do not comprise any separating film, it becomes possible to take out and reinsert the part provided with the separating film if required, even in the finished fibre composite component. This has the advantage that, in a foam body which remains in the fibre composite component in whole or in part, individual regions can be opened and closed in a simple manner even during production or else during subsequent use, for example in an aircraft or spacecraft, for assembly, maintenance or inspection purposes.

In a preferred configuration, after the step of further processing, material-removing machining is carried out on the foam body on a side of the foam body remote from the skin portion. This material-removing machining is advantageously carried out by milling, but material-removing machining should also be understood herein to include drilling, cutting or sawing processes etc. which serve to remove regions of the foam body. Any desired combination of milling, drilling, cutting and/or sawing etc. for creating the desired shape is also possible. The shape of the foam body can thus be configured flexibly as required.

In one configuration, the foam body is removed in regions during the material-removing machining in such a way that a recess is formed which reaches as far as the skin portion. In this context, a further rigidifying element is subsequently arranged in the recess and connected to the skin portion. The further rigidifying element may be connected to the skin portion in particular by way of additional connection elements, for example by riveting. This can be useful if the further rigidifying element is to be produced in another manner than by curing in a recess in the foam body.

In a further configuration, the foam body is removed in regions during the material-removing machining in such a way that regions of the foam body which are in contact with the skin portion and/or the rigidifying element are left as additional mechanically supporting components of the fibre composite component and/or for acoustically and/or thermally insulating the fibre composite component. In this way, the foam body can take on a load-bearing and/or insulating function at the points of the fibre composite component where this is desired, whilst weight can be saved by removing the foam body material at points of the fibre composite component where it is not desired. A load-bearing function of the foam body can contribute to reducing the number of rigidifying elements in a fibre composite component and to achieving a fibre composite component which is optimal in terms of weight. If the foam takes on an insulating function, fewer or no additional insulation materials, along with the corresponding mounting expense and space requirement, are necessary.

In one configuration, during the material-removing machining the foam body is provided with at least one recess or at least one groove for receiving non-structural system components of an aircraft or spacecraft, in particular components and/or lines for electrical power supply or data processing or data transfer or lines and/or components of a hydraulic system or an air-conditioning or ventilation system or a fuel system or a water/wastewater system. Mounting devices which are to be attached separately to a primary structure, in particular to rigidifying elements, for lines or components can be omitted. Instead, in particular lines can advantageously be held continuously, for example by laying them in an appropriate groove. This can advantageously prevent sagging and movement back and forth, in particular for cables. However, local bracing and mounting of lines or components, such as pipelines, by means of the foam body is also conceivable.

In one configuration, the rigidifying element is connected to the skin portion by means of additional connection elements, in particular by means of rivets, in regions, in particular in addition to an adhesive connection. This makes it possible to improve the robustness of the connection even further.

In one configuration, the foam body is provided, by way of the material-removing machining, with at least one access recess, which makes access possible to the rigidifying element from the side of the foam body remote from the skin portion. This may be advantageous in particular if the rigidifying element is additionally to be fixed to the skin portion, by attaching further connection elements, in particular rivets, after the first semi-finished product or preform and/or second semi-finished product are cured in the further processing step.

In one configuration, the foam body is removed substantially completely during the material-removing machining. As a result, the foam body virtually does not contribute to the weight of the fibre composite component, whilst it still has the aforementioned advantages during the manufacture of the fibre composite component.

In one configuration, after the further processing, and if material-removing machining is subsequently carried out on the foam body preferably after this machining, an internal lining for an internal region of an aircraft or spacecraft, in particular an internal lining for a passenger cabin ("cabin lining"), is attached to the foam body or to a foam component formed by regions left behind of the foam body. The internal lining can be fixed in particular by planar adhesion onto the foam body or the foam component. Separate mounting devices for the internal lining are thus not necessary. If the internal lining is glued onto the foam body or the foam components in a planar manner, the internal lining can additionally be made particularly light and cost-effective, for example in the form of a thin film instead of a self-supporting panel.

In a development, a material for forming a structurally supporting cover layer is applied to surface regions of the foam body on a side of the foam body remote from the skin portion. The material may in particular be a fibre formation impregnated with matrix material which is not cured or not completely cured ("prepreg"), which is subsequently cured, preferably under the effect of increased pressure and/or increased temperature, to form the structurally supporting cover layer. Alternatively, it is also conceivable to use a dry fibre formation as the material for the cover layer, the dry fibre formation in this case being soaked prior to the curing, by injection with the curable matrix material. This development has the advantage that local regions of the fibre composite component under heavier loads can be strengthened selectively.

In a preferred configuration, the fibre composite component is a structural component for an aircraft or spacecraft, in particular being a shell for a fuselage section of an aeroplane or being a fuselage section of an aeroplane.

In an alternative configuration, the fibre composite component is a structural component for forming an aerofoil or a tail unit of an aircraft or spacecraft, in particular of an aeroplane.

In one configuration of the method, the rigidifying element is a stringer, in particular a stringer having a T cross section or a stringer having an omega cross section.

In one configuration, the rigidifying element is a former, in particular a former having an omega cross section.

In a further configuration, the foam body comprises a plurality of recesses, a rigidifying element or a preform or first semi-finished product for forming the rigidifying element being arranged in each of the recesses at least in portions. As a result, a fibre composite component comprising a backing structure having a plurality of rigidifying elements can be produced in an economical manner.

In one development, the plurality of recesses include one or more recesses for receiving a stringer or a preform or first semi-finished product for a stringer and one or more recesses for receiving a former or a preform or first semi-finished product for the former.

In one configuration, to support an inner face of the stringer having an omega cross section and/or of the former having an omega cross section or of the first semi-finished product or preform provided for the stringer and/or former, a foam core or an inflatable hose-like core which can be removed again is used during curing.

The aforementioned fibre formations can each for example be configured as a unidirectional fibre cluster, a multi-axial fibre cluster, a fibrous tissue or a fibre braid. The fibres may in particular be carbon fibres. The aforementioned curable matrix materials are preferably a curable plastics material, in particular an epoxy resin.

In one configuration, the foam body is formed using a rigid foam, in particular a closed-cell rigid foam, in particular a polymethacrylimide rigid foam. The rigid foam preferably has a density of between 48 kilograms per cubic metre and 72 kilograms per cubic meter. For example, a suitable variety of the foam sold as Rohacell® by Evonik Industries AG, Darmstadt may be used. Suitable varieties of polymethacrylimide rigid foams of this type are light, can sufficiently withstand the temperatures and pressures which may occur during the curing process, and are additionally suitable in particular for efficient material-removing machining by milling. In addition, the closed-cell structure prevents matrix material from penetrating deep into the foam.

The above configurations, developments and improvements of the invention can be combined with one another in any reasonable manner. Further possible configurations, developments and implementations of the invention also include combinations not explicitly mentioned of features of the invention which are disclosed above or in the following in relation to the embodiments. In this context, the person skilled in the art will also in particular add individual aspects to each basic form of the present invention as improvements or supplements.

### CONTENTS OF THE DRAWINGS

In the following, the present invention is described in greater detail by way of the embodiments shown in the schematic drawings, in which:
Fig. 1 is a side view of an example aircraft which comprises a fibre composite component in accordance with a first embodiment of the invention;
Fig. 2 is a plan view of the example aircraft of Fig. 1;
Fig. 3 is a section A-A, as indicated in Fig. 2, through the structural component in accordance with the first embodiment;
Fig. 4-7 show a plurality of steps of a method in accordance with a second embodiment of the invention;
Fig. 8 is a perspective view of an example fibre composite component, which has been produced by the method in accordance with the second embodiment and which is in the form of a fuselage shell of an aircraft;
Fig. 9 is a perspective view of a fibre composite component in the form of a fuselage shell of an aircraft, to illustrate a third embodiment of the invention;
Fig. 10 is a perspective view of a fibre composite component, in the form of a fuselage shell of an aircraft, to illustrate a fourth embodiment of the invention;
Fig. 11 is a perspective view of a fibre composite component, likewise in a partly finished state, in the form of a fuselage shell of an aircraft, to illustrate a fifth embodiment of the invention;
Fig. 12 is a sectional view, normal to a longitudinal direction of the fuselage section, of a fibre composite component in the form of a fuselage section of an aircraft during the manufacture thereof, to illustrate a sixth embodiment of the invention;
Fig. 13 is a perspective view of the fibre composite component of Fig. 12, in a partially finished state and removed from a device;
Fig. 14-17 show a plurality of steps of a method in accordance with a seventh embodiment of the invention;
Fig. 18 shows a step of a method in accordance with an eighth embodiment of the invention;
Fig. 19 shows a step of a method in accordance with a ninth embodiment of the invention;
Fig. 20 shows a step of a method in accordance with a tenth embodiment of the invention;
Fig. 21 shows a step of a method in accordance with an eleventh embodiment of the invention;
Fig. 22-27 show a plurality of steps of a method in accordance with a twelfth embodiment of the invention;
Fig. 28-31 show a plurality of steps of a method in accordance with a thirteenth embodiment of the invention;
Fig. 32-33 show a plurality of steps of a method in accordance with a fourteenth embodiment of the invention;
Fig. 34 shows a foam body while the method in accordance with the fourteenth embodiment is being carried out;
Fig. 35 shows a step of a method in accordance with a fifteenth embodiment of the invention; and
Fig. 36 is a perspective view of a fibre composite component, in a partially finished state, in the form of a fuselage shell of an aircraft, to illustrate a sixteenth embodiment of the invention.

The accompanying drawings are intended to provide further understanding of the embodiments of the invention. They illustrate embodiments, and serve, in connection with the description, to describe principles and concepts of the invention. Further embodiments and many of the aforementioned advantages can be seen from the drawings. The elements of the drawings are not necessarily shown to scale. In the drawings, like, functionally equivalent and identically acting elements, features and components are provided with like reference numerals, unless stated otherwise.

### DESCRIPTION OF EMBODIMENTS

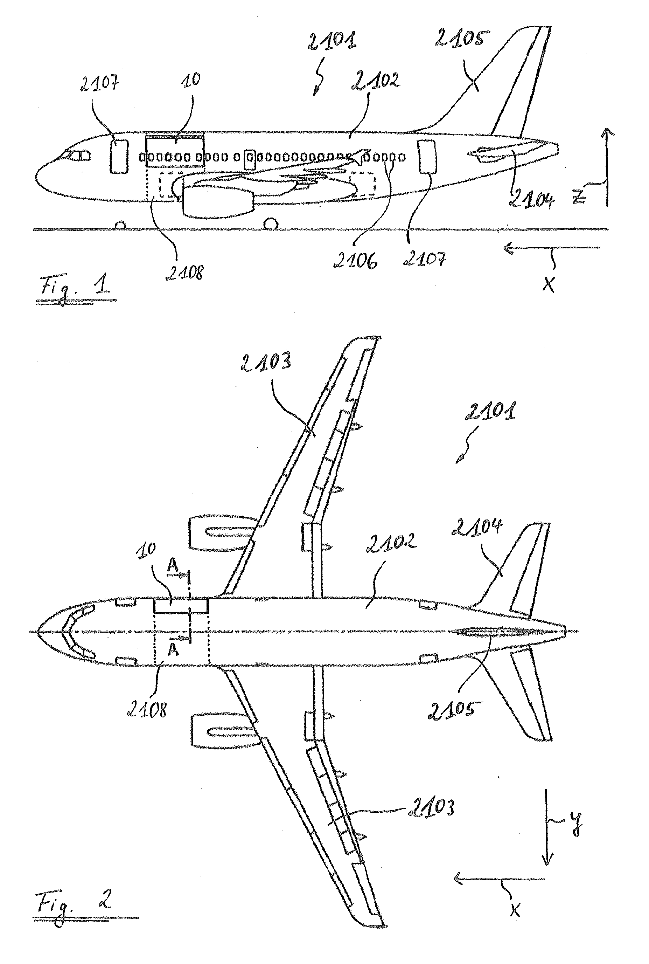

Fig. 1 and 2 show an aircraft 2101 in the form of an aeroplane, which comprises a fuselage 2102, aerofoils 2103, a horizontal tail plane 2104 and a rudder unit 2105. The fuselage 2102 is provided with windows 2106 and with doors 2107 for passengers and crew. For orientation, reference signs x, y and z denote a longitudinal direction x, a wingspan direction y and a vertical direction z in relation to the aircraft 2101. In Fig. 1 and 2, a fibre composite component 10 in the form of a fuselage shell is further illustrated, and as a structural component of the aircraft 2101 forms part of a fuselage section 2108, indicated using dotted lines in Fig. 1 and 2.

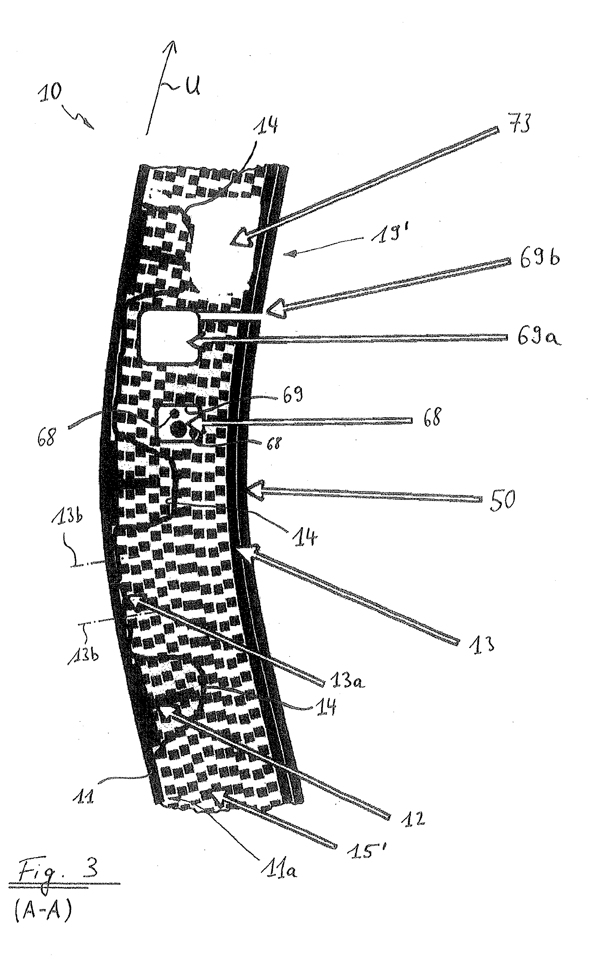

Fig. 3 is a section A-A through the fibre composite component 10, which has been manufactured and formed in accordance with a first embodiment of the invention. In Fig. 3, reference sign U indicates a circumferential direction of the fuselage 2102. The fibre composite component 10 comprises a skin portion 11 and rigidifying elements 12 and 13, which are arranged on a first side 11a of the skin portion 11 and form a backing structure for rigidifying the skin portion 11. In Fig. 3, the rigidifying elements 12 are formed as a stringer having a T cross section, whilst the rigidifying element 13 is formed as a former and comprises through-openings 14, through which the rigidifying elements 12 extend.

The fibre composite component 10 further comprises, on the first side 11a, a foam component 15', which is connected to the skin portion 11 and the rigidifying elements 12, 13 and which has originated from a single-part or multi-part foam body by material-removing machining, by means of which the material of the foam body has been removed for example in a region 73. In the first embodiment, the region 73 has been produced by milling. This makes it possible to shape the foam component 15' on a side 19' remote from the skin portion 11 and to save weight in the finished fibre composite component 10, whilst remaining regions of the foam body as the foam component 15' cover and protect the rigidifying elements 12. The foam component 15' is also positioned flat against the skin portion 11. The foam component 15', which is formed from a closed-cell rigid foam, thus provides an acoustic and thermal insulation effect for an inside of the fuselage shell with respect to the outside thereof.

A cable duct 69 having cables 68 laid therein, which may be in the form of power supply cables, data transfer cables, glass fibre cables or the like, is arranged in the foam component 15'. The foam component 15' further contains an air-conditioning duct 69a, from which a ventilation outlet 69b extends away from the skin portion 11 through the foam component 15'.

The rigidifying elements 12, 13 and the skin portion 11 are made from a fibre-reinforced plastics material, for example by embedding carbon fibres in an epoxy resin matrix. The rigidifying elements 12 and 13 have been cured together with the skin portion and thus connected. This is referred to as "co-curing". In the first embodiment, in the region of the former foot there is a connection region 13a, in which the rigidifying element 13 is fixed to the skin portion 11 by rivets 13b, in addition to the adhesive connection which results from the curing together with the skin portion 11. So as to make the connection region 13a accessible, the foam component 15' may comprise, close to the connection region 13a, a recess (not shown in Fig. 3) which can be formed by milling away the foam body similarly to in the region 73 but as far as the former foot.

On the side 19' of the foam component 15', an internal lining 50 ("cabin lining") is fixed thereto and to exposed portions of the shown former 13 by planar adhesion.

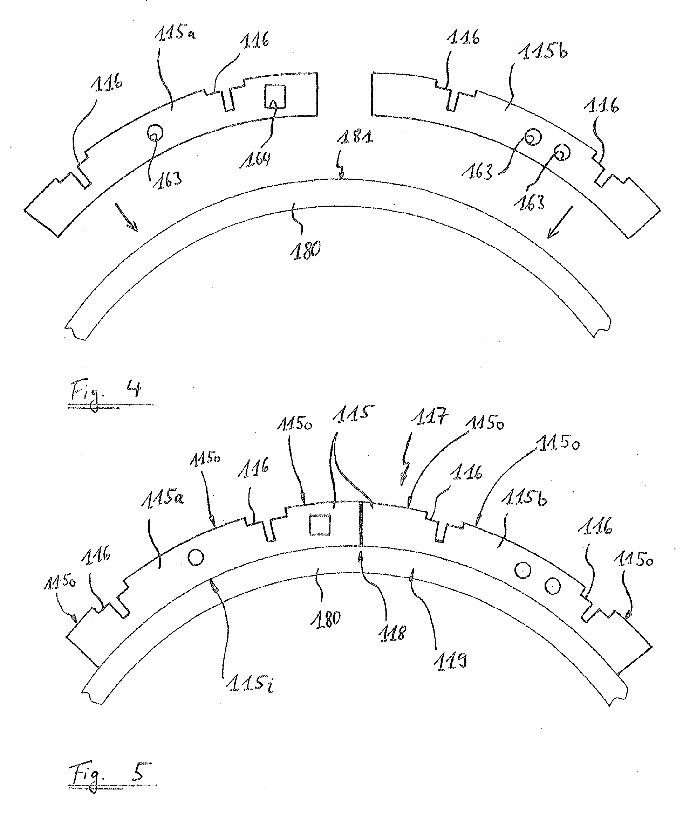

A method in accordance with a second embodiment of the invention is illustrated in Fig. 4 to 7. Initially, two parts 115a, 115b of a two-part foam body 115 are prepared and positioned on a device 180, which forms a "male tool" for laying the parts 115a, 115b on. In the second embodiment, the device 180 comprises a support face 181, which substantially forms part of a cylinder surface. The support face 181 is thus of a simple shape. There are substantially no elevations or recesses on or in the support face 180.

Fig. 4 schematically shows the parts 115a and 115b being laid on the support face 181 of the device 180. Fig. 5 shows the foam body formed of the parts 115a, 115b after they are laid down. In Fig. 5, the two parts 115a, 115b are mutually adjacent at a joint 118. An inner face 115i of the foam body 115 on a second side 119 of the foam body 115 opposite the first side 117 thereof substantially corresponds to the support face 181. To prevent the parts 115a, 115b from slipping on the support face 181, the parts 115a, 115b can be fixed on the device by suitable measures, for example by mechanical fixing means such as pins or the like, by clamping devices, by vacuum or in another suitable manner. If required, the parts 115a, 115b can be glued in the region of the joint 118 to ensure positioning, or (not shown) engage in one another by way of corresponding positive connection elements on the parts 115a, 115b.

As can further be seen from Fig. 4, in the second embodiment the parts 115a, 115b of the foam body 115 are already provided with multiple recesses 116, the purpose of which is to be explained further, during preparation. Further, the parts 115a, 115b already comprise through-openings 163, 164 during preparation, which in Fig. 4 extend substantially perpendicular to the plane of the drawing and thus approximately parallel to the support face 181 and parallel to a face in which the respective part 115a, 115b primarily extends. The purpose of the through-openings 163, 164 will also be explained further.

The parts 115a, 115b are dimensionally stable and can be manufactured prior to preparation and positioning on the device 180 in that the recesses 116 are machined out of a geometrically relatively simply shaped rigid foam raw material, such as a foam brick, foam block or foam cylinder segment. The external contour of the parts 115a, 115b may already be produced during the manufacture of the rigid foam raw material, or likewise by machining it. The same applies to the through-openings 163 and 164, which can be shaped during the manufacture of the foam raw material or machined into it subsequently. For machining the rigid foam raw material to produce the parts 115a, 115b, a milling method, for example CNC milling, is preferably possible; however, thermoforming the foam could also be considered. Other material-removing methods, such as drilling, are also conceivable. The rigid foam raw material is in particular a piece of a closed-cell rigid foam, in particular a polymethacrylimide rigid foam such as Rohacell®.

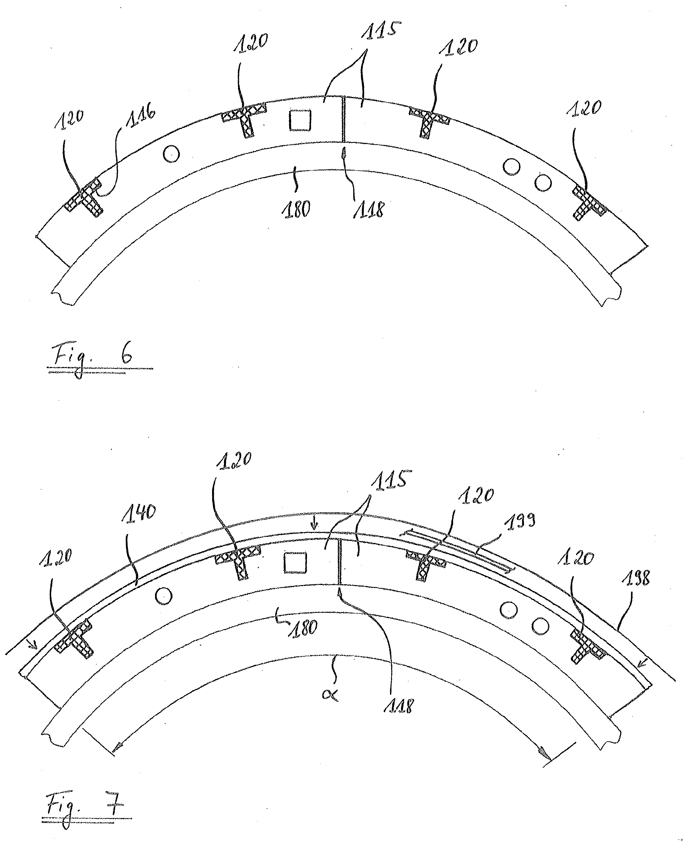

The recesses 116, which in the second embodiment are formed substantially as grooves having an inverted T-shaped cross section, are open towards the first side 117 of the foam body 115. As is shown in Fig. 6, in the method according to the second embodiment, after the parts 115a, 115b are positioned on the device 180, a preform or first semi-finished product for forming a rigidifying element, in the second embodiment for forming T stringers, is arranged in each of the recesses 116. For clearer illustration, Fig. 6 and 7 merely show cross-hatched elements schematically denoted by reference numeral 120, it being possible either for each of the elements 120 to be a prefabricated preform which is laid in the respective recess 116 as a whole or for the element 120 to be formed of individual layers of the first semi-finished product, the layers for example being laid in the respective recess 116 in succession. A combination of the two procedures is also conceivable. From this point onwards, in the second and the following embodiments, a preform or first semi-finished product of this type is denoted by the same reference numeral.

In the second embodiment of Fig. 4 to 7, the preform 120 can be formed using a fibre formation, which is impregnated with a matrix material which is not cured or not completely cured, and laid in the respective recess 116 in this pre-impregnated state. If layers of the first semi-finished product are laid in the respective recesses 116 in succession, layers of this type may likewise be formed from a fibre formation pre-impregnated with a matrix material which is not cured or not completely cured ("prepreg").

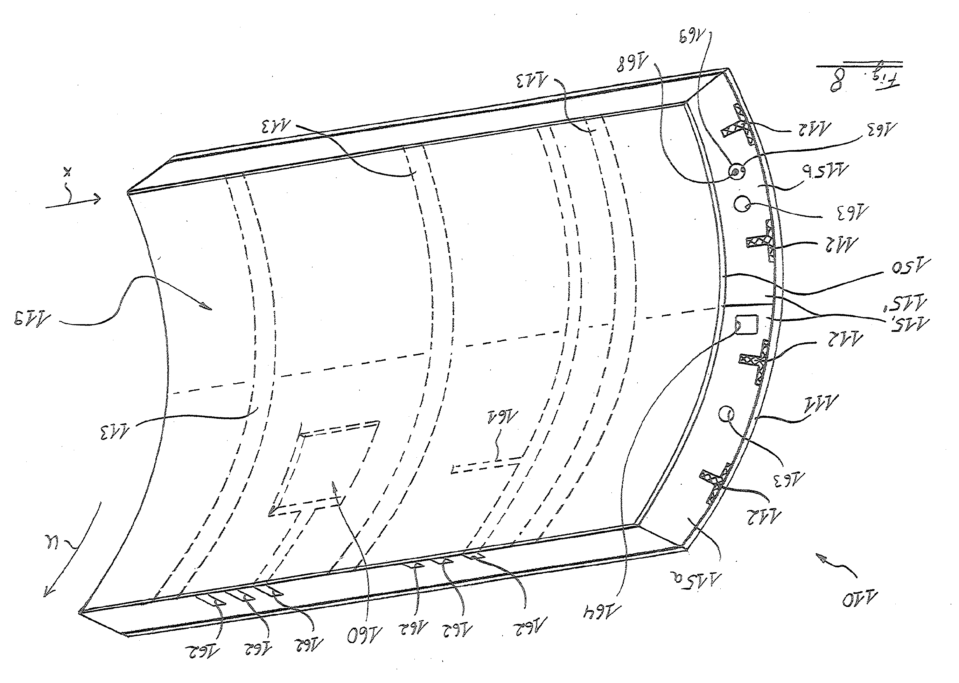

In accordance with the second embodiment, the preforms or first semi-finished products 120 are not yet cured in the state of Fig. 6. As is shown in Fig. 6, the respective preform or the respective semi-finished product 120 is positioned flat in the associated recess 116 on the dimensionally stable foam body 115 and supported thereby. In the method according to the second embodiment, the foam body 115 therefore acts as a shaping tool for the rigidifying element 112 to be manufactured from the preform or first semi-finished product 120 (see Fig. 8).

As is schematically illustrated in Fig. 7, in the following a second semi-finished product 140, which is preferably likewise in the form of a fibre formation impregnated with a matrix material which is not cured or not completely cured, is attached to the foam body 115, for example by a suitable laying method. A plurality of layers of a fibre formation pre-impregnated in this manner can be deposited on the foam body 115 as a second semi-finished product 140. The second semi-finished product 140 comes into planar contact with the first side 1117 of the first side 117 of the foam body 115 and with the preform or first semi-finished product 120. Surface portions 115o of the foam body 115 (see Fig. 5) on the first side 117 of the foam body 115 are shaped in a manner corresponding to a target shape, predetermined for the finished fibre composite component 110 shown in Fig. 8, of a respective region of the skin portion 111. As a result, the foam body 115 can also act as a shaping means, which gives the skin portion 111 the target shape thereof, during the formation of the skin portion 111 (see Fig. 8) from the second semi-finished product 140.

After the second semi-finished product 140 is attached, in the second embodiment pressure plates 199, the size of which is selected as required, and a vacuum bag or a vacuum film 198 are arranged on the second semi-finished product 140 (see Fig. 7). Subsequently, the entire construction, comprising the device 180, the foam body 115, the preforms or first semi-finished products 120, the second semi-finished product 140, the pressure plates 199 and the vacuum bag 198, is introduced to an autoclave and cured at a pressure of approximately 3 to 7 bar and temperatures of up to 180 degrees Celsius. In this context, in the second embodiment the preform or first semi-finished product 120 is connected to the second semi-finished product 140 to form a fibre composite component, in which a skin portion 111 produced from the second semi-finished product 140 is connected ("co-curing") to rigidifying elements 112, in this case T stringers (see Fig. 8), produced from the first semi-finished products or preforms 120.

In a variant of the method in accordance with the second embodiment, instead of the pre-impregnated preform or pre-impregnated first semi-finished product 120, it could already be a completely cured rigidifying element, for example a cured T stringer as a composite component of a fibre composite material, which is laid in the respective recess 116. In this variant, the foam body 115 acts as a shaping tool for the skin portion 111 and facilitates the handling and positioning of the rigidifying elements in relation to the second semi-finished product 140. In the subsequent curing in the autoclave under the effect of increased pressure and increased temperature, the rigidifying elements are connected to the skin ("co-bonding").

In another variant, the skin portion 111 could already be present in the form of a cured composite component, which is laid on the foam body 115 and the first semi-finished product or preform 120 and is connected to the formed rigidifying elements during curing in the form of "co-bonding".

An example fibre composite component 110 produced by the method in accordance with the second embodiment of the invention is sketched in Fig. 8. The rigidifying elements 112 in the form of T stringers have been rigidly connected to the skin portion 111 during the curing process. As is further shown in Fig. 8, the parts 115a, 115b of the foam body 115 have been connected to the skin portion 111 and the rigidifying elements 112 during the curing process in that the matrix material contained in the second semi-finished product 140 and/or the preforms or first semi-finished products 120 penetrates into the surface of the parts 115a, 115b in regions and is subsequently cured. The use of a closed-cell rigid foam for the foam body 115 prevents the matrix material from penetrating too deep into the foam structure. This type of connection can be referred to as adhesion. The foam body 115 remaining in the fibre composite component 110 forms a foam component 115' of the finished fibre composite component 110.

Further rigidifying elements 113 are schematically illustrated in Fig. 8, and are formed in the same way as the rigidifying elements 112 and can be cured simultaneously with the skin portion 11 and the rigidifying elements 112. The rigidifying elements 113 extend transverse to the rigidifying elements 112, and can be used as formers for the fibre composite component 110 in the form of a fuselage shell. Alternatively, the rigidifying components 113 could also be omitted if not required.

After the curing process in the autoclave, in accordance with the second embodiment, to produce the fibre composite component 110 shown in Fig. 8, the skin portion 111, along with the rigidifying components 112, 113 connected thereto and the foam body 115 connected to the skin portion 111 and at least to the rigidifying elements 112, was removed from the autoclave, and the vacuum bag 198, the pressure plates 199 and further possibly required elements such as lines for applying the vacuum etc., and the produced workpiece were removed from the device 180. Subsequently, material-removing machining, in particular milling, was carried out on the foam body 115 from a second side 119 of the foam body 115 remote from the skin portion 111. Grooves 162 and 161, extending in the circumferential direction U and in the longitudinal direction x of the fibre composite component 110 in accordance with a circumferential and longitudinal direction of the fuselage 110, have been milled into the surface of the foam body 115 on the second side 119. A recess 160 has also been formed in the foam body 115 by milling. The foam component 115' thus comprises the grooves 161, 162 and the recess 160.

The purpose of the grooves 161, 162, the recess 160 and the through-openings 163, 164 is now to be described in greater detail.

As well as the supporting primary structure, the aircraft 2101 of Fig. 1 and 2 comprises a number of systems for the operation of the aircraft 2101 and the comfort of the passengers. Components, lines and the like of systems of this type are to be referred to as non-structural system components. Systems for electrical power supply, systems for processing and transferring data, hydraulic systems, air-conditioning and ventilation systems, fuel systems or water/wastewater systems are conceivable as systems of this type.

The grooves 161, 162 are milled into the foam body 115 remaining in the fibre composite component 110 from the second side 119 as required, preferably in a computer-controlled, automated manner. The arrangement of the grooves 161, 162 can thus be varied for different fibre composite components 110 in a very simple manner by altering the milling program. Lines, such as pipes, hoses or cables, for the aforementioned systems, in other words for example electric lines, glass fibre lines or fluid-conveying lines, can be laid in the grooves 161, 162 from the second side 119 of the foam body 115. In this way, separate system holders for the lines and fixing of these system holders to parts of the primary structure, for example to the rigidifying elements 112 or 113, are not required. In addition, removing the forces which would otherwise be introduced at points by the system holders can have a positive effect on the configuration and weight of the rigidifying elements 112, 113. In addition, the lines can be placed closer together and closer to the primary structure, since the continuous support of the lines by the foam components 115' means that sagging or back-and-forth movement cannot occur during flight manoeuvres. Instead of laying the line directly in the groove 161, 162, if required a pipe or duct for receiving the line can also be inserted into the respective groove 161, 162. In this context, the line could already be contained in the pipe or duct or be introduced subsequently.

If required, the recess 160 can also be placed in a suitable position and receive a system component not in the form of a line, for example an operating element, a display element etc.

As was disclosed above, the through-openings 163 and 164 are already contained in the parts 115a, 115b during the preparation thereof, and extend in the fibre composite component 110 substantially parallel to the skin portion 111, and extend for example substantially in the longitudinal direction x. Pipes, lines or ducts, for example electrical lines, data lines, fluid-conveying lines, pipes or ducts for receiving lines of this type and ducts for ventilating a passenger cabin, may be inserted into the through-openings 163, 164. For this purpose, if the through-openings 163, 164 extend at the level of the rigidifying elements 113, through-openings are provided in the rigidifying elements 113 in a suitable position. The pipes, lines and/or ducts may already be present in the parts 115a, 115b during the preparation thereof, or for example be inserted into the through-openings 163, 164 after the parts 115a, 115b are positioned on the device 180. The components, lines, pipes and ducts which are already present in the foam body 115 prior to the curing process, which takes place subsequent to Fig. 7, are preferably configured in such a way that they can withstand the pressures and temperatures of the curing process without taking any damage. A component or line, or a pipe or duct, which has not expanded at these pressures or temperatures, can be added after the curing process, for example by inserting a line 168 into a cable duct 169 already located in the through-opening 163 of the foam body 115.

After finishing the grooves 161, 162 and the recess 160 and arranging system components and/or lines (not shown) in the grooves 161, 162 and/or the recess 160, in the second embodiment an internal lining 150 for the inner region of the aircraft 2101 has been applied to the foam component 115', which is formed by the regions of the foam body 115 which remain after the milling, and fixed flat by adhesion. The internal lining 150 may be a web-like or film-like lining for a passenger cabin ("cabin lining"). Various thicknesses of the internal lining 150 can be selected. If a large number of grooves 161, 162 and recesses 160 are introduced, a somewhat thicker lining 150 is advantageously selected which can bridge between these without the risk of damage to the lining 150. On the other hand, if the grooves 161, 162 and the recess 160 are dispensed with, the internal lining 150 could for example be formed as a thin decorative film which is glued to the foam.

The fibre composite component 110 in accordance with the second embodiment of the invention brings together the following advantages:
- an optimised, simple, flexible manufacture, suitable for fibre composite, with a reduction in the number of components to be joined together in separate steps, and thus a high degree of structural integration,
- support of the skin portion 111 and the rigidifying elements 112, 113, in particular against warping, by the foam body 115, which remains in the fibre composite component 110 over a large area as a foam component 115',
- protection of the skin portion 111 and the rigidifying elements 112, 113 by the foam body 115 against damage (for example improving the "damage tolerance"),
- integration of a large number of lines and components into the fibre composite component 110, and corresponding saving on space, weight and work,
- integration of the thermal and acoustic insulation by way of the foam body which remains over a large area and accordingly avoidance of additional assembly steps for other insulation materials,
- integration of an internal lining 150 for the passenger cabin and corresponding saving on the assembly of the self-supporting lining panels which would otherwise be required along with the associated mountings thereof.

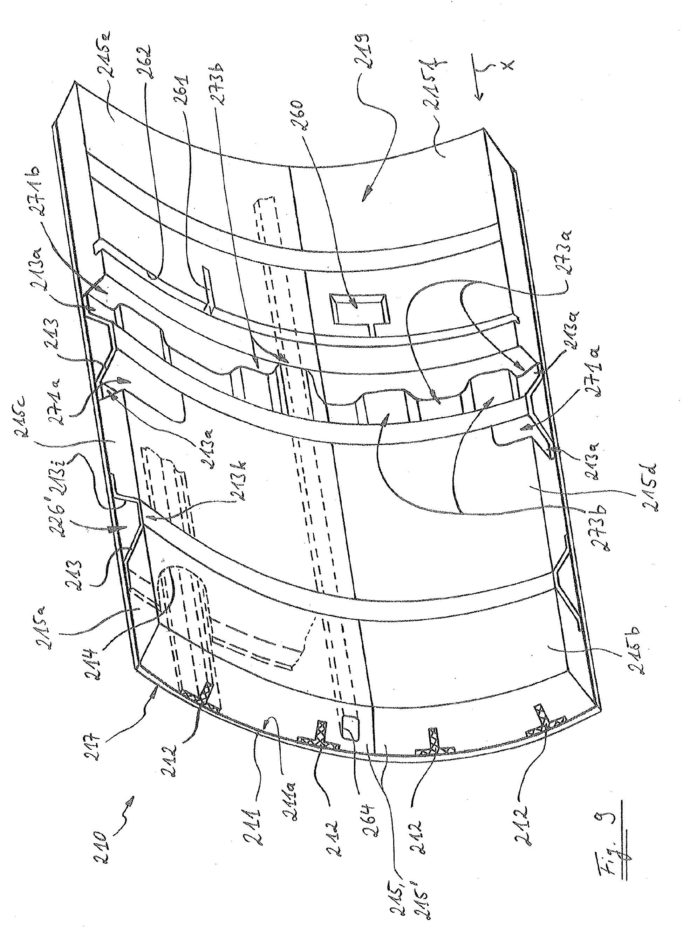

Fig. 9 shows a fibre composite component 210 formed in accordance with a third embodiment of the invention, comprising a skin portion 211 and rigidifying elements 212, 213 and again being a fuselage shell for an aeroplane fuselage. The rigidifying elements 212 are again in the form of T stringers, whilst the rigidifying elements 213 are in the form of formers having an omega cross section. As regards the manufacture of the rigidifying elements 212, reference is made to what is stated above in relation to the second embodiment. The rigidifying elements 213 may for example be laid in assigned recesses of a foam body 215 as already cured composite components, for example during the positioning of parts 215a-f of the foam body on a device. However, in the fibre composite component 210 of Fig. 9, the rigidifying elements 213 are exposed in portions, specifically in the region of the respective ridge portions 213k thereof, which each terminate flush with the foam component 215' remaining in the fibre composite component 210. This can be achieved in that the recesses of the foam body 215 which are assigned to the rigidifying elements 213 penetrate as far as the support face of a device on which the foam body 215 is positioned, or by suitable removal of the foam body 215 by milling to form the foam component 215'.

Fig. 9 further shows a through-opening 214 of the rigidifying element 213, which is set up for passing a rigidifying element 212 through.

However, the rigidifying elements 213 may also be cured together with the skin portion 211 and the rigidifying elements 212. For this purpose, in a variant of the third embodiment, cores 226', for example foam cores likewise made of a closed-cell rigid foam such as Rohacell®, may be used so as to brace an inner face 213i of the rigidifying element 213 during the curing of a semi-finished product or preform for the rigidifying element 213 and give this inner face 213i the provided shape. A core 226' of this type could also be shaped suitably in the region of the penetration of the rigidifying element 212 and the rigidifying element 213 so as to give the rigidifying elements 212, 213 the provided shape in the penetration region.

Fig. 9 further shows a penetration opening 264 for a ventilation duct, and grooves 261, 262 and a recess 260 which are formed by milling from a second face 219 of the foam body 215 remote from the skin portion, in the same way as in the second embodiment.

In the fibre composite component 210 according to the third embodiment, the rigidifying elements 213 are connected to the skin portion 211 in connection regions 213a, which are in the form of former feet, during curing of a semi-finished product to bond the skin portion 211 and the curing of preforms or semi-finished products to form the rigidifying elements 212 and optionally also the rigidifying elements 213. If the rigidifying component 213 is also hardened in this context, the adhesion in the connection region 213a is provided by "co-curing", and if the rigidifying component 213 has been laid in an associated recess of the foam body 215 when already cured, it is provided by "co-bonding".

Fig. 9 shows that, in the fibre composite component 210 of the third embodiment, the foam body 215 has been provided, in the vicinity of one of the rigidifying elements 213, with milled-in access recesses 271a, 271b, which make access possible to portions of the connection regions 213a of the rigidifying element 213 of the side 219 of the foam body 215 remote from the skin portion 211. This makes it possible further to fix the rigidifying element 213, arranged on the right in Fig. 9, to the skin portion 211 in the accessible regions of the connection regions 213a by means of further fixing elements, in particular by means of rivets, in addition to the adhesive connection produced during the curing process by "co-curing" or "co-bonding", and thus further to improve the connection of the skin portion 211 to the connection element 213. As is sketched in Fig. 9 by way of the access recess 271b, the access recess 271b can be formed in that regions 273a of the foam body 215 have been removed completely, all the way through to the connection region, whilst in regions 273b the foam body 215 remains in part, for example as warping supports or for protecting the rigidifying elements 212 or for fixing a ventilation duct inserted into the through-opening 264.

In the third embodiment too, a foam component 215' of the fibre composite component 210 formed by the remaining regions of the foam body 215 can be glued from the second side 219 to an internal lining (not shown in Fig. 9 for clarity), similarly to in the second embodiment.

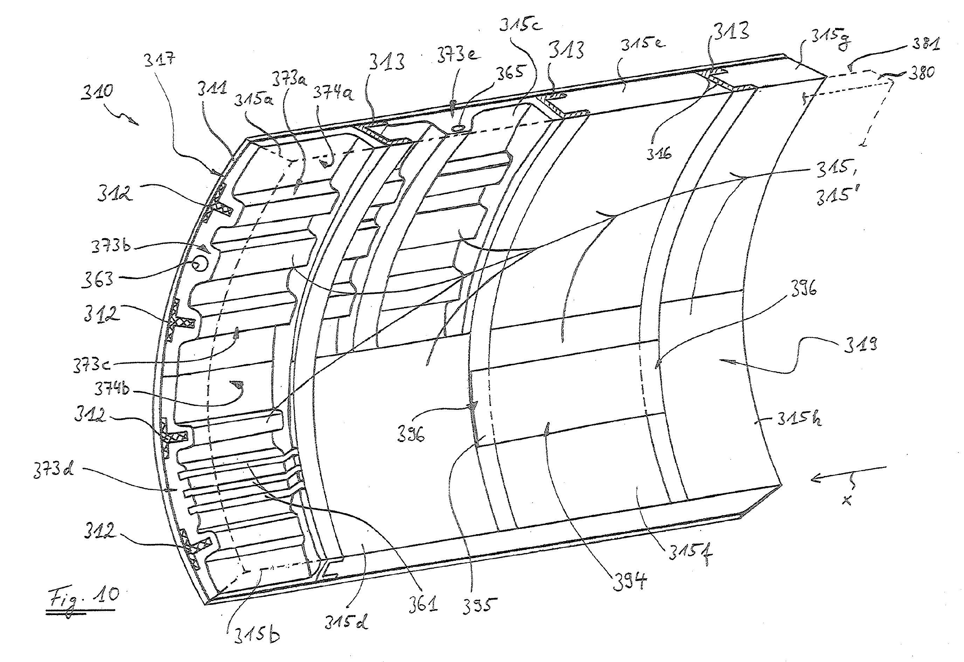

Fig. 10 illustrates a fourth embodiment of the invention. A fibre composite component 310 in turn comprises a skin portion 311 and rigidifying elements 312, 313. In the fibre composite component 310 in accordance with the fourth embodiment, the rigidifying elements 313 are in the form of C formers, which could, during the positioning of parts 315a-h of a multi-part foam body 315 on a device 380, be inserted as composite components in a cured state between two parts 315e, 315g of the foam body 315, between which a recess 316 of the foam body 315 is subsequently formed which penetrates as far as a support surface 381 of the device 380.

In the fibre composite component 310 of Fig. 10, the rigidifying elements 312 are again in the form of T stringers. In relation to the manufacture of the rigidifying elements 312, the skin portion 311 and the connection thereof, reference can be made, in this case too, to what is stated above for the second embodiment.

In the fourth embodiment too, a large proportion of the originally provided foam body 315 remains in the fibre composite component 310 as the foam component 315', material-removing machining again having been carried out on the foam body 315 on a second side 319 of the foam body 315 remote from the skin portion 311, and the foam component 315' thus having been shaped. The parts 315d, 315e, 315f, 315g and 315h are shown not yet machined in Fig. 10, but can if required likewise be machined from the side 319, for example by milling.

When the parts 315a to 315c were machined, regions of the foam body 315 which extend along the rigidifying elements 312 and 313 were left behind. The original extents of the parts 315a-c are indicated in dashed lines in Fig. 10. Regions of the foam which have been left can be used for protecting the rigidifying elements 312 from damage and as warp supports. In addition, in the fibre composite component 310, the foam body 315 has been left, in such a way that the remaining foam extends along the skin portion 311 and the rigidifying elements 312, 313 as an acoustically and thermally insulating layer. In detail, regions 373a, 373c of the foam body 315 enclose portions of rigidifying elements 312. In addition, regions 373b and 373e have also been left, since through-openings 363, 365, for example for receiving lines, pipes or ducts as described previously, extend through these regions. A region 373d of the foam body 315 has been left during machining so as to be able to introduce grooves 361 for laying ducts or the like in. The rest of the parts 315a-c of the foam body 315 have been milled away to save weight in the fibre composite component 310 of Fig. 10.

In addition, Fig. 10 shows how the foam body 315, the advantages of which during production were stated previously above, can also further be used for forming a local sandwich construction. In Fig. 10, reference numeral 394 denotes a surface region of the foam body 315 not provided with recesses or grooves, on the second side 319 thereof remote from the skin portion 311. A structurally supporting inner cover layer 395 is attached to the surface region 394 and to exposed surface portions 396, terminating flush with the foam body 315, of two rigidifying elements 313. The cover layer 395 can be manufactured, after a first curing process for curing and connecting the skin portion 311 and the rigidifying elements 312, 313, by applying a suitable material, for example one or preferably more layers of a fibre formation pre-impregnated with a matrix material which is not cured or not completely cured ("prepreg"), to the surface regions 394, 396 and subsequently curing again in the autoclave, for example using pressure plates and a vacuum bag. A local sandwich construction of this type, in which regions of the foam body 315 form a core between the skin portion 311 and the cover layer 395, may be found to be useful in regions of the fibre composite component 310 under particularly high loads. Whilst a fibre composite component formed entirely in a sandwich construction is often relatively heavy, the local sandwich produced by means of the cover layer 395 makes another more weight-optimised construction possible.

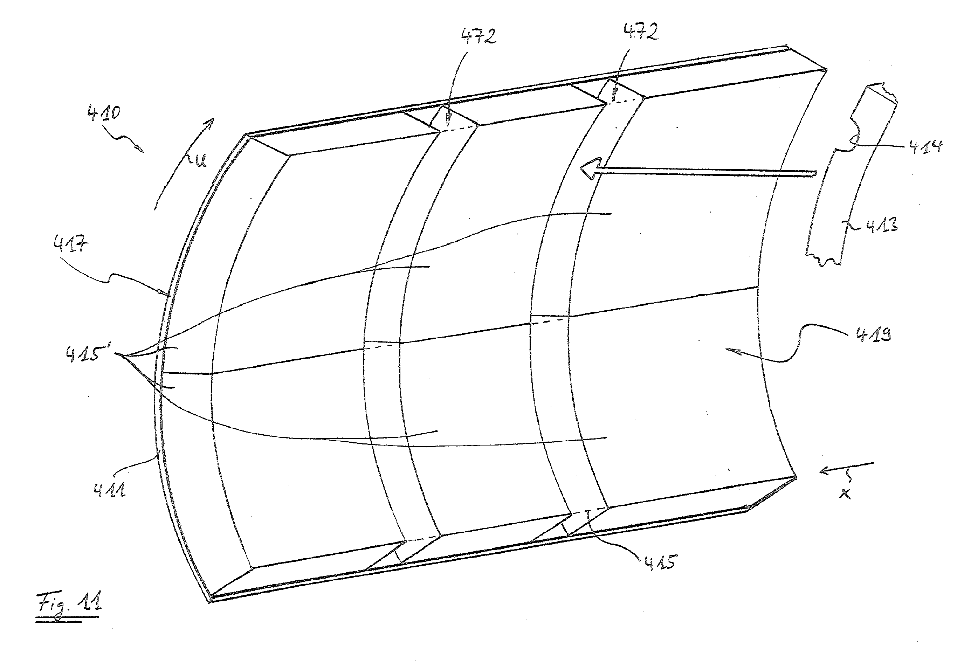

Fig. 11 illustrates a fibre composite component 410 in accordance with a fifth embodiment, which likewise comprises a skin portion 411 and rigidifying elements (not shown in Fig. 11) in the form of stringers, which are connected to the skin portion 411. Fig. 11 also shows a foam component 415', which is formed from regions, left in the fibre composite component 410, of the original foam body 415 (indicated in dashed lines in part) using the thereof facing the skin portion 411. As regards the connection of the skin portion 411, rigidifying elements and foam body 415, reference is made to the second embodiment.

In the embodiment of Fig. 11, material-removing machining, for example by milling, has been carried out on the foam body 415 so as to form recesses 472, which extend substantially in the circumferential direction U. The recesses 472 each reach as far as the skin portion 411 in the thickness direction of the foam body 415, except in the regions in which they cross the stringers (not shown). A rigidifying element 413 (merely indicated schematically in Fig. 11) in the form of a former, comprising a through-opening 414 for a stringer, can be inserted into the recess 472, after said recess is formed from a second side 419 of the foam body 415 remote from the skin portion 411, and connected to the skin portion 411. The rigidifying element 413 is connected to the skin portion 411 in particular by riveting.

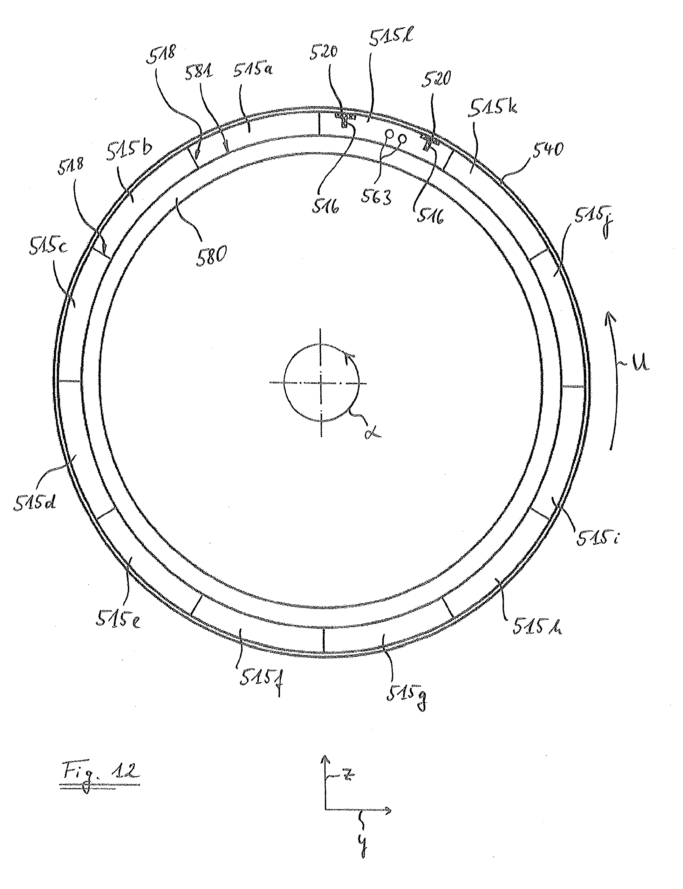

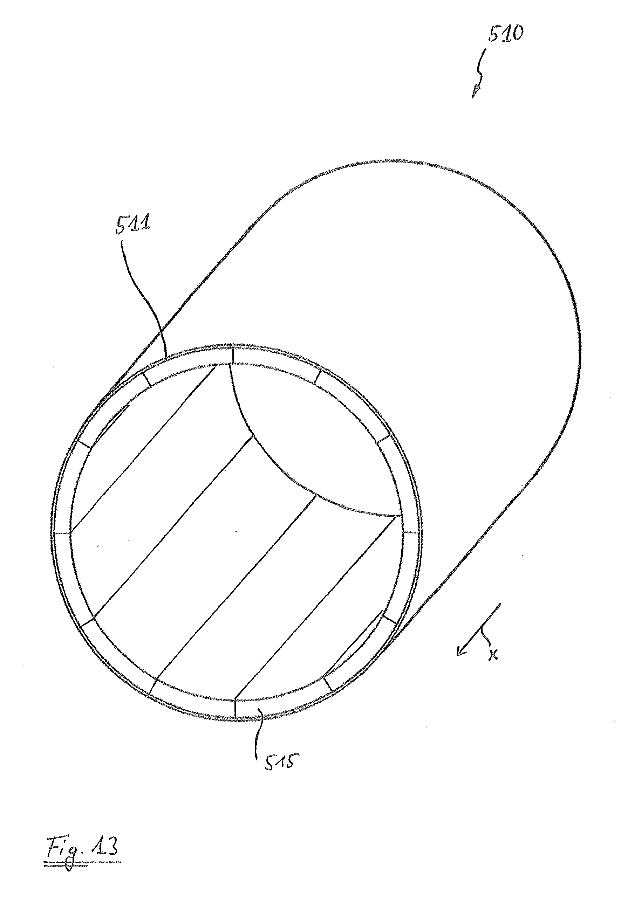

In the second embodiment, as is sketched in Fig. 7, the foam body 115 positioned on the substantially cylindrical support face 181 of the device 180 extends over an angle α < 180°. As a result, a fuselage shell for the fuselage 1202 of the aircraft 1201 is manufactured. However, the angle α can be varied in accordance with the requirements. In a sixth embodiment, the angle may be α = 360°, in such a way that the produced fibre composite component 510 (see Fig. 12 and 13) forms a fuselage section 2108. To manufacture the fibre composite component 510, a plurality of parts 515a-1 of a foam body 515 are prepared and positioned on a support face 581, which is cylindrical in Fig. 12. For clarity, recesses 516 and through-openings 563 are only drawn for the part 5151, but it will be appreciated that all of the parts 515a-1 may be provided with recesses 516 and through-openings 563, identically or differently from one another. For example, the recesses 516 may be arranged at regular intervals along the peripheral direction U. In relation to the preparation of the parts 515a-1, the positioning thereof, and the production of the recesses 516 and preforms or first semi-finished products 520, reference is made to what is stated above for the second embodiment.

A second semi-finished product 540, in particular in the form of layers of a pre-impregnated fibre formation, can be applied by laying or winding methods. Subsequently, this is followed by a curing step, as described for the second embodiment. In a variant of the sixth embodiment, instead of the preforms or first semi-finished products 520, rigidifying elements already in the form of cured composite components can be laid in the recesses 516 and connected to the skin portion 511 (see Fig. 13) during the curing of the semi-finished product 540 in the form of "co-bonding". Fig. 13 shows schematically the fibre composite component 518 which is removed from the device 580 after the curing process. Material-removing machining, by milling, can be carried out on the foam body 515, which is glued to the skin portion 511 during curing, from the inside of the fibre composite component 580 in the manner described for the previous embodiments.

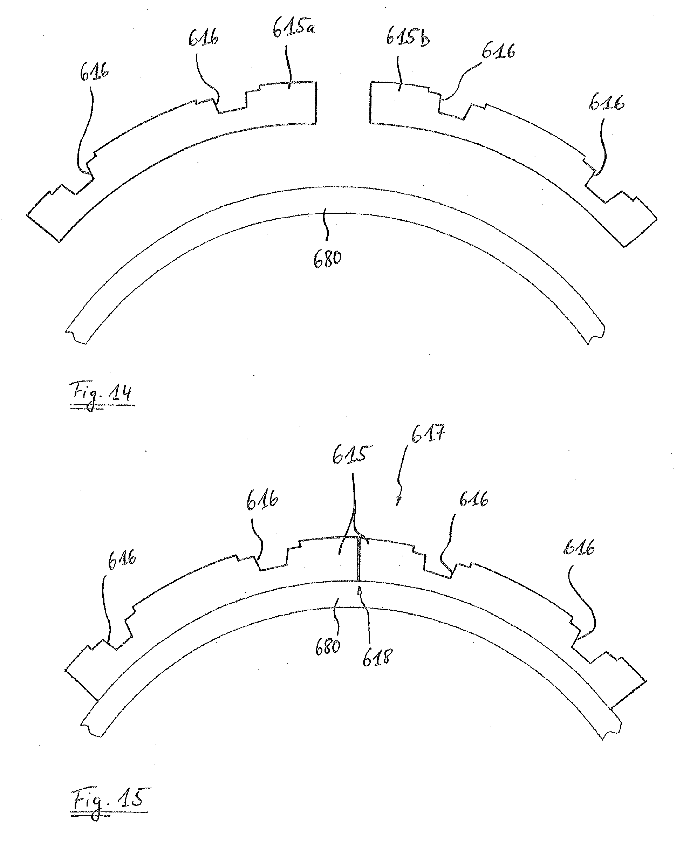

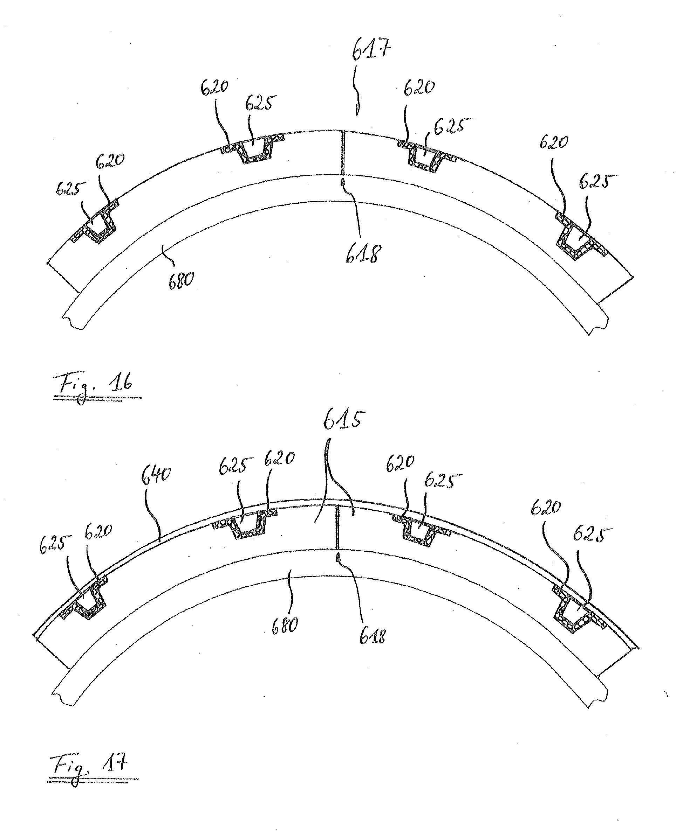

Fig. 14 to 17 sketch a plurality of steps of a method in accordance with a seventh embodiment, which is a variant of the second embodiment in accordance with Fig. 4 to 7. The seventh embodiment differs from the second embodiment in that parts 615a, 615b of a foam body 615 are not yet provided with through-openings for cables, lines etc. when they are prepared and positioned on a device 680. A further difference is the shape of recesses 616 which open towards a first side 617 of the foam body 615. In the seventh embodiment, the recesses 616 are configured in such a way that they are suitable for receiving a rigidifying element in the form of a stringer having an omega cross section or for receiving first semi-finished products or preforms for forming omega stringers of this type. Fig. 16 shows the arrangement of first semi-finished products or preforms 620, as described for the second embodiment in relation to T stringers, for omega stringers of this type. To achieve the correct internal shape, the first semi-finished products or preforms 620 are braced from the inside using cores 625, which may be in the form of foam cores or inflatable hoses.

After the first semi-finished products or preforms 620 and the cores 625 are arranged in the recesses 616, which are provided in the parts 615a, 615b positioned against one another at a joint 618, to form a skin portion of the fibre composite component to be manufactured a second semi-finished product 640 is applied, in accordance with what is stated above for the second embodiment, to the foam body 615, the first semi-finished products or preforms and the cores 625, covered with pressure plates (not shown in Fig. 17) and a vacuum bag or vacuum film, and cured in an autoclave. The foam body 615 can be machined in the same way as was described for the previous embodiments.

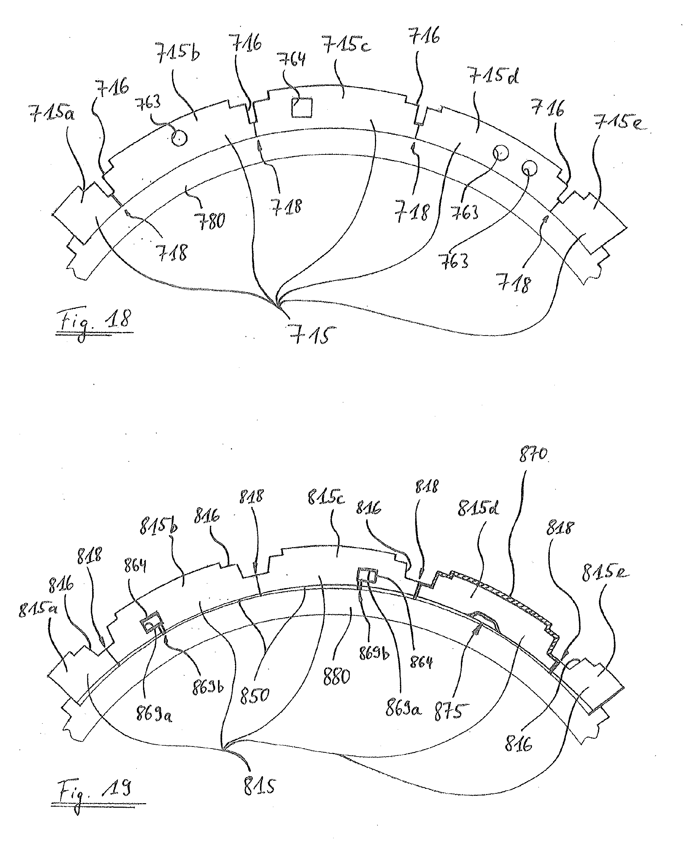

Fig. 18 shows parts 715a-e of a foam body 715, which are positioned on a device 780 and are positioned against one another at joints 718. Through-openings 763, 764 are formed in the foam body 715. In the eighth embodiment of Fig. 18, the joints 718 are located in the region of the recesses 716 of the foam body 715. The recesses 716 are for example shaped for receiving T stringers or first semi-finished products or preforms for T stringers.

Fig. 19 shows parts 815a-e of a foam body 815 in accordance with a ninth embodiment. The foam body 815 comprises recesses 816, which in this example are formed for receiving omega stringers or first semi-finished products or preforms for omega stringers. In Fig. 19, joints 818 between adjacent parts 815a-e are arranged in the region of the recesses 816. In the ninth embodiment, through-openings 864 having air-conditioning ducts 869a arranged therein are provided in the parts 815b and 815c of the foam body 815 when it is prepared and positioned on a device 880. In addition, the parts 815b-c already have ventilation outlets 869b during preparation, which for example subsequently serve for air-conditioning the passenger cabin of the aircraft 1201 and which are connected to the respective air-conditioning duct 869a. Further, in the ninth embodiment, the parts 815a-e are each already provided during preparation with components of an internal lining 850, through which the ventilation outlets 869b extend, on the side thereof facing the device 880.

The part 815d of the foam body 815 is provided in regions on the surface thereof with a separating film 870, which prevents the part 815d from adhering to a skin portion and a rigidifying element of the finished fibre composite component during curing. After the fibre composite component is finished, the part 815d can subsequently easily be removed from the fibre composite component, for example so as to provide accessibility for subsequent operations, to facilitate testing of the fibre composite component or to make maintenance operations possible in the finished aircraft 2101. For better handling, the part 815d may be provided with a type of recessed grip 875 or the like, although this may also be omitted if required. If all of the parts 815a-e of the foam body 815 are to be removed completely from the finished composite component after the curing process, all of these parts could be provided with a separating film, the internal lining 850 being omitted if the foam body 815 does not remain in the finished fibre composite component.

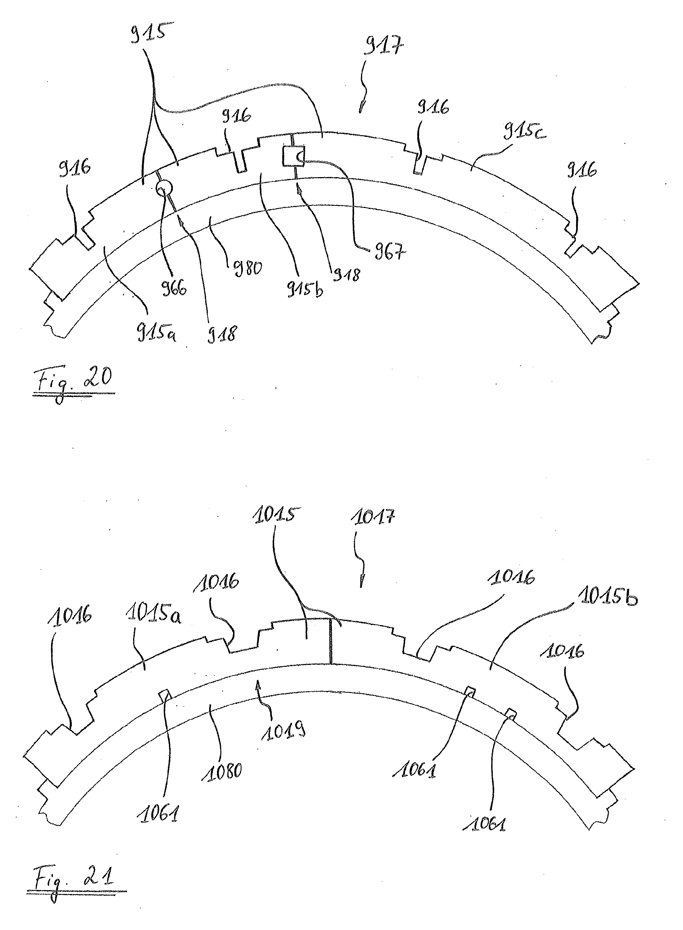

In the tenth embodiment shown in Fig. 20, parts 915a-c of a foam body 915 are formed in such a way that joints 918 are located in the region of through-openings 966, 967 in the foam body 915. This can make it easier to lay pipes, ducts, lines or other components in the through-openings 966 or 967. The cross section of the respective through-opening 966, 967 is closed during the arrangement and positioning of the parts 915a-c on a device 980. For example, the parts 915a-c comprise recesses 916 for T stringers or for first semi-finished products or preforms for forming T stringers, which are open towards a first side 917 of the foam body 915.

Fig. 21 illustrates an eleventh embodiment of the invention, in which parts 1015a, 1015b of a foam body 1015 comprise, on a first side 1017 thereof, recesses 1016 for omega stringers or for forming omega stringers from first semi-finished products or preforms, and additionally are already provided, during preparation and prior to arrangement on a device 1080, with grooves 1061 on a second side 1019 of the foam body 1015. The grooves 1061 can subsequently be used for laying lines or ducts in.

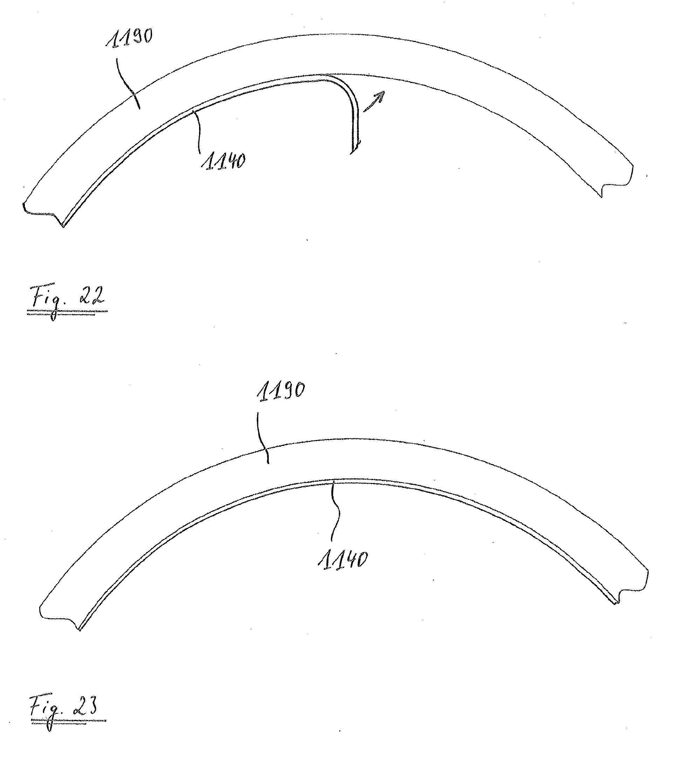

Fig. 22 to 27 again show the manufacture of a fibre composite component, formed as a shell for an aeroplane fuselage and comprising T stringers for rigidification, by a method in accordance with a twelfth embodiment. Unlike in the second embodiment of Fig. 4-7, in the twelfth embodiment, to form a skin portion for the fibre composite component a second semi-finished product 1140 is initially laid on an inner side of a female shaping tool 1190 (see Fig. 22 and 23).

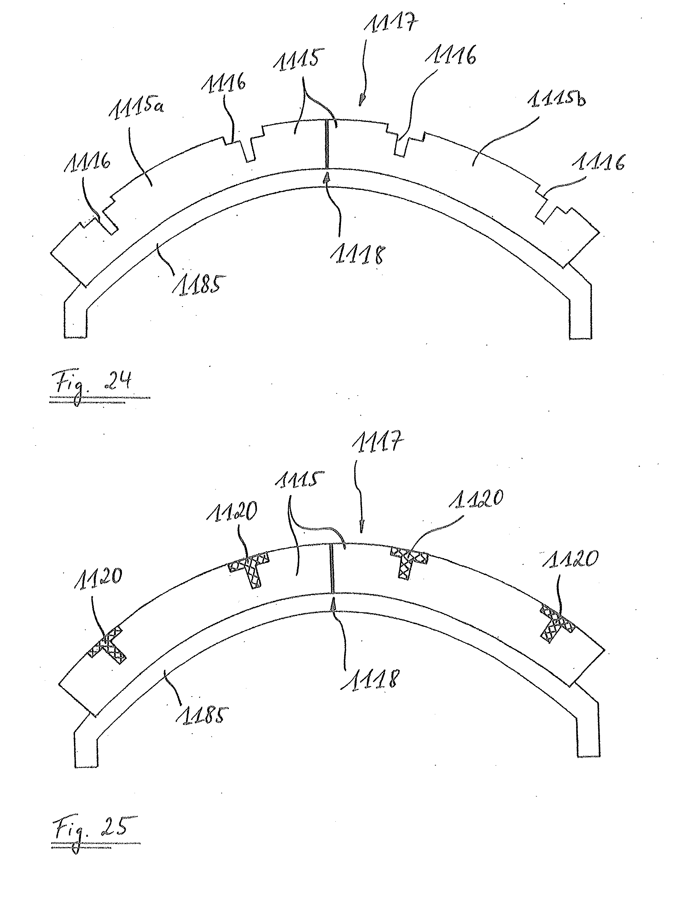

As is shown in Fig. 24 and 25, parts 1115a and 1115b of a foam body 1115 are additionally prepared, arranged on a device 1185 and positioned, in such a way that the parts 1115a, 1115b are positioned against one another at a joint 1118. The parts 1115a, 1115b comprise recesses 1116, which are open towards a first side 1117 of the foam body 1115.

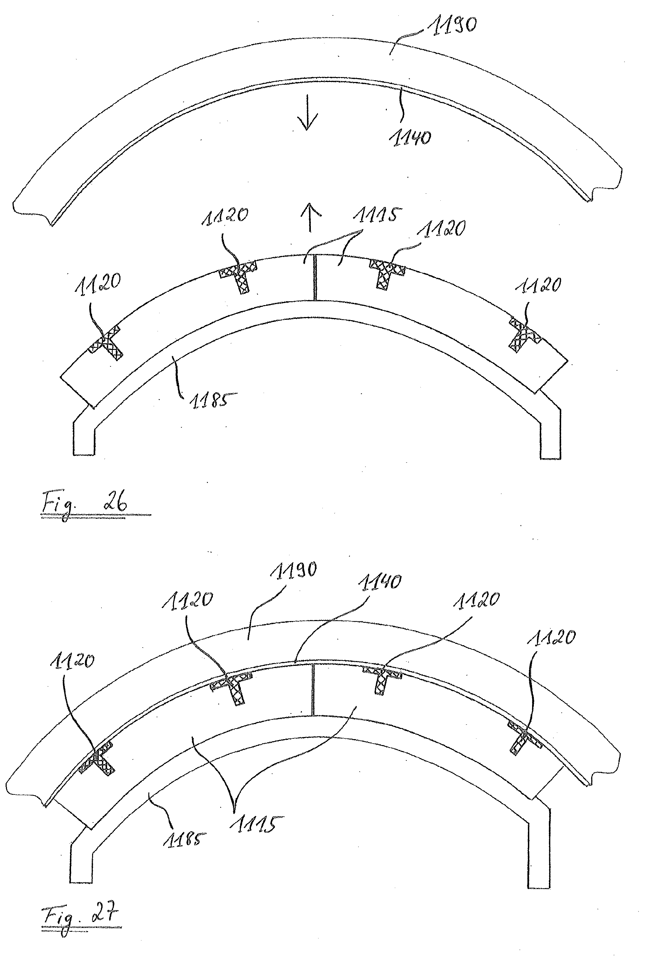

As was described above for the second embodiment, first semi-finished products or preforms 1120 for rigidifying elements in the form of T stringers are arranged in the recesses 1116 (Fig. 25). Subsequently (Fig. 26, 27), the female shaping tool 1190, comprising the applied second semi-finished product 1140, and the device 1185 are positioned relative to one another and moved towards one another, causing the second semi-finished product 1140 to be brought into planar contact with the foam body 1115 and the first semi-finished products or preforms 1120. Subsequently, the first semi-finished products or preforms 1120 and the second semi-finished product 1140 are cured to form a fibre composite component comprising a skin portion and comprising rigidifying elements and also comprising a foam body which is connected to the skin portion and the rigidifying elements.

In a variant of the twelfth embodiment, the rigidifying elements can be laid in the recesses in the form of cured T stringers, whilst the second semi-finished product 1440 is not yet or not completely cured, the rigidifying elements being "co-bonded" to the skin portion subsequently during further processing. Alternatively, in another variant, preforms or first semi-finished products 1120 which are not cured or not completely cured could be used, whilst the semi-finished product 1140 has already been cured separately in an earlier step.

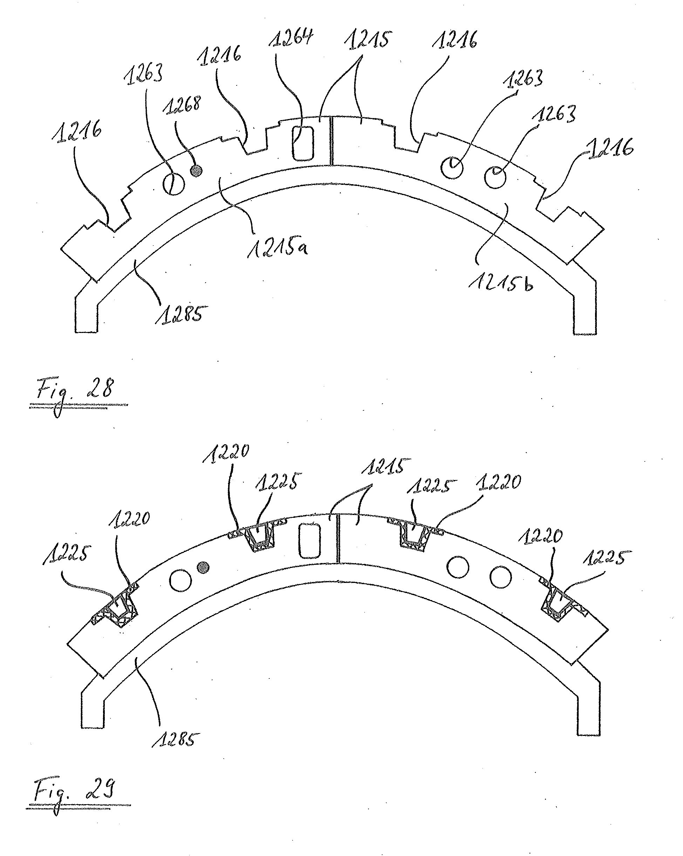

Fig. 28-31 illustrate a thirteenth embodiment, which is a variant of the twelfth embodiment.

In the thirteenth embodiment, parts 1215a-b of a foam body 1215 are again provided which are arranged on a device 1285. The thirteenth embodiment differs from the twelfth in the shape of the recesses 1216, which are now configured to receive omega stringers or first semi-finished products or preforms 1220 for forming omega stringers. Fig. 29 shows schematically the cores 1225, which may be in the form of foam cores or removable, inflatable hoses, used for forming the internal shape of the omega stringers.

The parts 1215a and 1215b already comprise through-openings 1263 and 1264 during preparation for receiving pipes, lines, ducts and the like. In addition, a line 1268, for example a pipe suitable for conveying fluids, a hose or a cable, is embedded in the part 1215a, directly in the foam material of which the part 1215a is made. Similarly, cable ducts or air-conditioning ducts may also be embedded directly in the part 1215a during the manufacture thereof. In this context, the already embedded components are selected in such a way that they in particular also withstand, without damage, the conditions under which the subsequent curing process takes place.

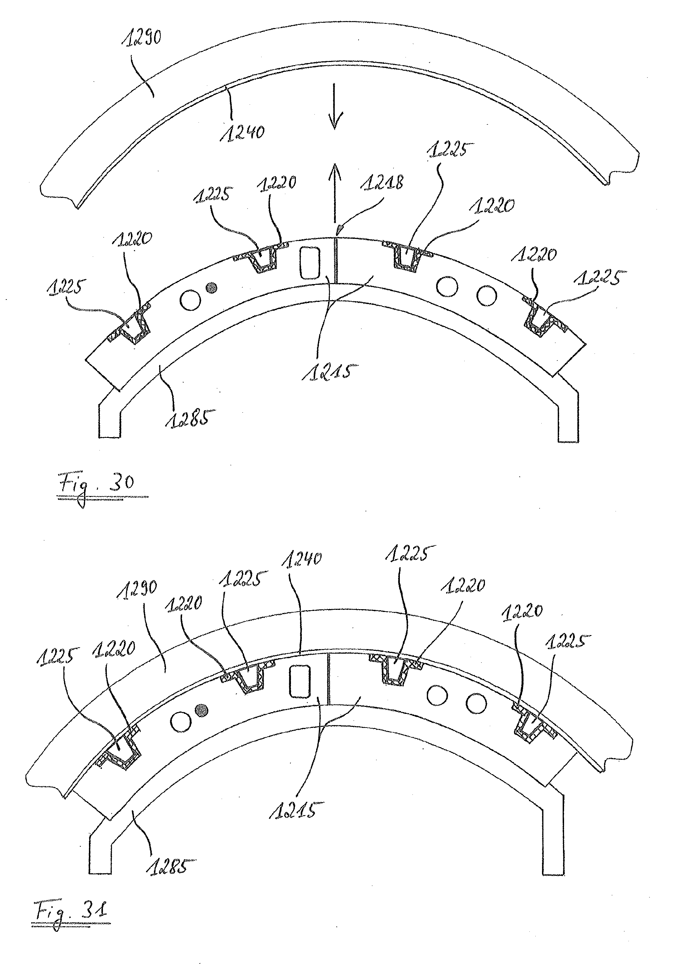

After the first semi-finished products or preforms 1220 and the cores 1225 are arranged in the recesses 1216, a second semi-finished product 1240 (Fig. 30, 31), laid on the inside of a female shaping tool 1290, for a skin portion of the fibre composite component is brought into contact with the foam body 1215, the first semi-finished products or preforms 1220 and the cores 1225. Subsequently, the matrix materials which are not yet or not completely cured are cured.

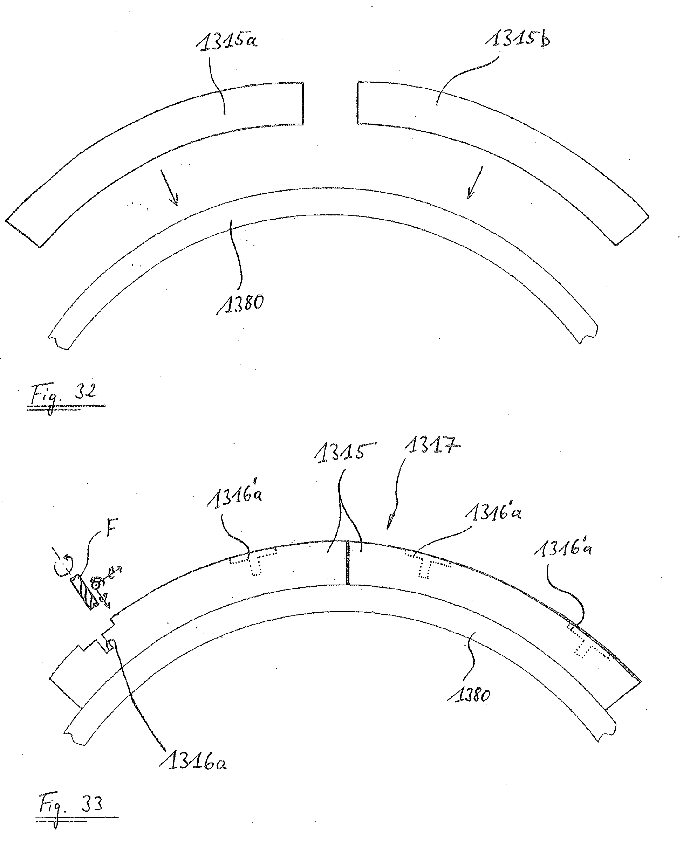

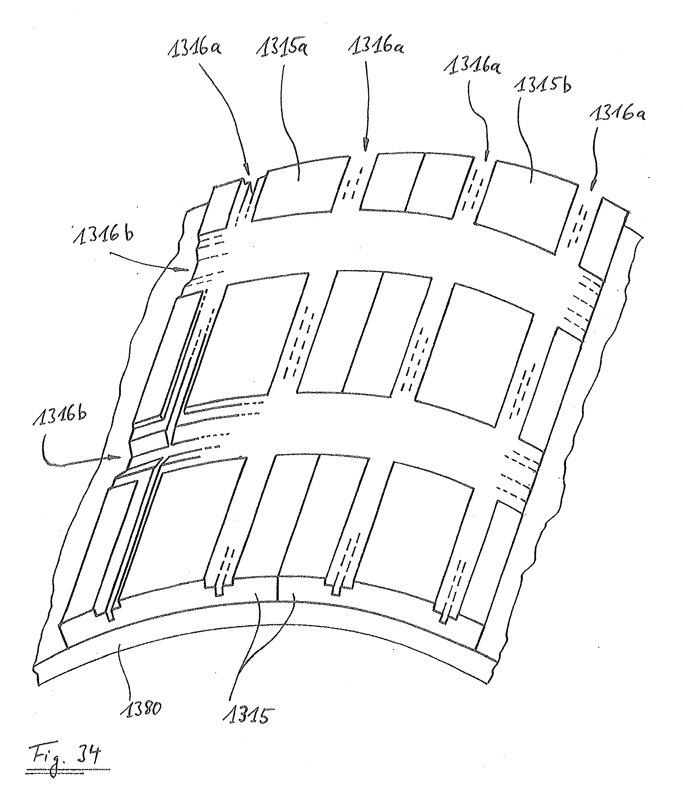

Fig. 32 to 34 illustrate a fourteenth embodiment of the invention. Parts 1315a, 1315b of a foam body 1315, which are of a simple shape and in the example of Fig. 32-34 are for example in the form of segments of a hollow cylinder, are initially laid on a device 1380. Preferably, the parts 1315a, 1315b are fixed on the device 1380 in the respectively correct position using suitable measures. Subsequently, the parts 1315a, 1315b of the foam body 1315 are milled using a milling tool F, recesses 1316a and 1316b are thus cut out of the foam material of the parts 1315a, 1315b, these recesses 1316a,b being open towards a first side 1317 of the foam body 1315. The groove-like recesses 1316a in the embodiment of Fig. 32-34 are formed to receive T stringers or first semi-finished products or preforms for T stringers, whilst the groove-like recesses 1316b are formed to receive formers of an omega cross section or first semi-finished products or preforms for forming formers of an omega cross section and the corresponding cores. Fig. 34 also shows how the recesses 1316b extend transverse to the recesses 1316a. Some recesses 1316a' which have been planned but not yet milled out are shown in dotted lines in Fig. 33.

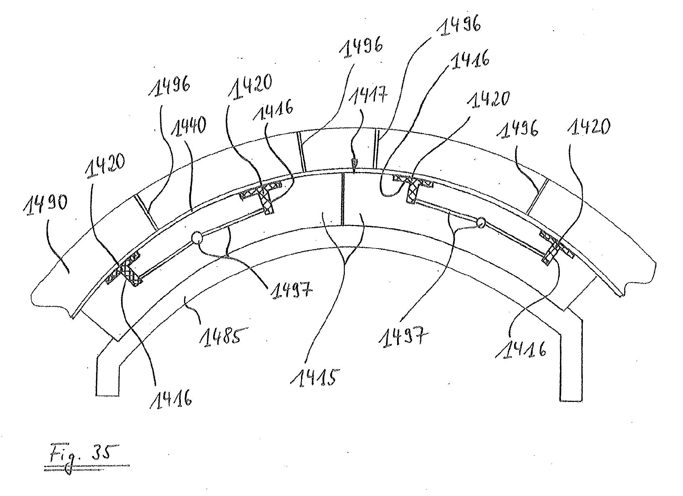

In a fifteenth embodiment, which is a variant of the twelfth embodiment in accordance with Fig. 22-27 and is illustrated in Fig. 35, the fibre formations, by means of which the rigidifying elements are formed, are not arranged as semi-finished products of a pre-impregnated form in recesses 1416 of parts 1415a-b of a foam body 1415, which open towards a first side 1417 of the foam body 1415, but instead either a first semi-finished product 1420 in the form of individual layers of a dry fibre formation is laid in the recesses 1416 or a preform 1420 made of a dry fibre formation is inserted into the respective recess 1416.

In the embodiment of Fig. 35, a dry fibre formation is initially brought into contact with the foam body 1415 on the first side 1417 thereof and with the preforms or first semi-finished products 1420, as a second semi-finished product 1440.

The parts 1415a, 1415b are arranged on a device 1485. One side of the second semi-finished product 1440 is positioned on the parts 1415a,b and the first semi-finished products or preforms 1420, whilst a female shaping tool 1490 is arranged on the other side of the second semi-finished product 1440. Ducts 1496 and 1497 are provided in the shaping tool 1490 and in the parts 1415a,b of the foam body 1415 respectively, and serve to fill the space formed between the foam body 1415 and the shaping tool 1490, in which space the second semi-finished product 1440 and the first semi-finished products or preforms 1420 are located, with a curable plastics material, for example an epoxy resin. Some of the ducts 1496, 1497 are used for supplying the resin, whilst air located in the space can escape through others of the ducts. An injection method is thus carried out in which the semi-finished products or preforms are soaked with the matrix material and the foam body acts to shape a skin portion and rigidifying elements. In a variant of the fifteenth embodiment, already cured rigidifying elements could also be laid in the recesses 1416, in which case the ducts 1497 can be omitted and a matrix material is only injected into the second semi-finished product 1440.

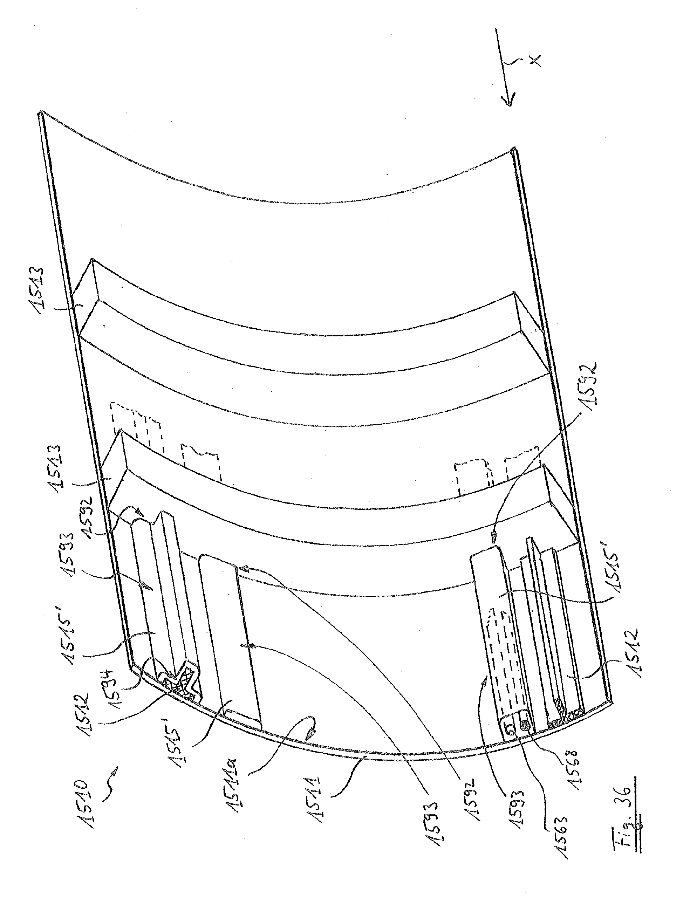

Fig. 36 illustrates a sixteenth embodiment of the invention. A fibre composite component 1510, again a shell for a fuselage of an aircraft, comprises a skin portion 1511, rigidifying elements 1512 which are in the form of T stringers, and rigidifying elements 1513 (not shown in detail) which are in the form of formers. The rigidifying elements 1512, 1513 form a backing structure for rigidifying the skin portion 1511 on a first side 1511a of the skin portion 1511. A foam body (not shown in Fig. 36) which is originally present during the manufacture of the fibre composite component 1510 has been largely removed by removing material by milling. In Fig. 36, the remainder of the foam body forms a foam component 1515', shaped by the material-removing machining, which comprises a plurality of individual components distributed over the fibre composite component 1510. As a result, the foam component 1515' covers one of the rigidifying elements 1512 substantially completely in a region 1594, whilst the foam component 1515' only covers the skin portion 1511 locally in sub-regions 1593 and only covers one of the rigidifying elements 1513 locally in sub-regions 1592. The remaining regions of the skin portion 1511, the rigidifying elements 1513 and the rigidifying element 1512 shown at the bottom of Fig. 36 are accessible from the inside of the fibre composite component 1510. In the embodiment of Fig. 36, the sub-regions which are covered locally by the foam component 1515' are thus provided outside the rigidifying elements 1512, 1515 and between the rigidifying elements 1512, 1513. As a result of such an extensive removal of the foam body, the weight of the fibre composite component 1510 is kept low, whilst the remaining foam component 1515' merely serves locally as a reinforcement, as a warp support, as protection for the rigidifying elements or for mounting non-structural system components. In Fig. 36, for example, a through-opening 1563 for receiving ducts or lines or the like and a line 1568 are sketched.

It should be noted that in the above-disclosed embodiments, where reasonable, in particular in the embodiments where the joint between two parts of the foam body does not extend through the recess in the foam body, a rigidifying element, first semi-finished product or preform may already be received in the recess at a time when the part of the foam body is not yet positioned on the respective device. Subsequently, the part of the foam body comprising an already filled recess can be arranged on the device. A procedure of this type could be useful for improving flexibility in manufacture.

In all of the above-disclosed embodiments, the skin portion and the rigidifying elements are each formed from a fibre-reinforced plastics material. Preferably, this involves embedding carbon fibres in an epoxy resin matrix. However, other fibre types and other matrix material may also be used in a suitable combination. The fibre formations may be in the form of unidirectional or multi-axial fibre clusters, fibrous tissues or a fibre braid, and may be dried or pre-impregnated. In all of the disclosed embodiments, the curing preferably takes place in an autoclave, for example at a pressure of approximately 3 to 7 bar and a temperature of approximately 180 degrees Celsius, although the pressures and temperatures can vary from these values depending on the material selection.

In addition, in all of the above-disclosed embodiments, a rigid foam, preferably a closed-cell rigid foam, in particular a polymethacrylimide rigid foam such as Rohacell®, for example having a density of between 48 and 72 kilograms per cubic meter, is preferably used to form the foam body.

Although the invention has been disclosed in the above by way of preferred embodiments, it is not limited thereto, but can be modified in various ways. It is further noted that, where technically reasonable, the above embodiments can be combined with one another as desired.

In a modification of the invention, the reinforcing fibres for forming the rigidifying element or the skin portion or both could be embedded in a thermoplastic plastics material matrix instead of in a curable matrix material. Subsequently, by means of a foam body which withstands the occurring temperatures, by increasing the temperature appropriately a first semi-finished product having thermoplastic matrix contained therein could subsequently be shaped to form the rigidifying element and/or a second semi-finished product having thermoplastic matrix contained therein could be shaped to form the skin portion, and the skin portion and rigidifying element could be connected by means of the softened thermoplastic matrix. A connection of this type, by means of a softened thermoplastic matrix, is also conceivable in the context of the present invention in the case where either the rigidifying element is already provided as a cured composite component and a thermoplastic matrix of the rigidifying element is softened by increasing the temperature for connection to the skin portion or vice versa.

### List of reference numerals

- 10: Fibre composite component
- 11: Skin portion
- 11a: First side (skin portion)
- 12: Rigidifying element
- 13: Rigidifying element
- 13a: Connection region (rigidifying element)
- 13b: Rivet
- 14: Through-opening (rigidifying element)
- 15': Foam component
- 19': Side (foam component)
- 50: Internal lining
- 68: Cable
- 69: Cable duct
- 69a: Air-conditioning duct
- 69b: Ventilation outlet
- 73: Region (foam body)
- 110: Fibre composite component
- 111: Skin portion
- 112: Rigidifying element
- 113: Rigidifying element
- 115o: Surface portion (foam body)
- 115: Foam body
- 115': Foam component
- 115a: Part (foam body)
- 115b: Part (foam body)
- 115i: Inner face (foam body)
- 116: Recess
- 117: First side (foam body)
- 118: Joint
- 119: Second side (foam body)
- 120: First semi-finished product or preform
- 140: Second semi-finished product
- 150: Internal lining
- 160: Recess (foam body)
- 161: Groove (foam body)
- 162: Groove (foam body)
- 163: Through-opening (foam body)
- 164: Through-opening (foam body)
- 165: Line
- 168: Line
- 169: Cable duct
- 180: Device
- 181: Support face (device)
- 198: Vacuum bag or vacuum film
- 199: Pressure plate
- 210: Fibre composite component
- 211: Skin portion
- 211a: First side (skin portion)
- 212: Rigidifying element
- 213: Rigidifying element
- 213a: Connection region (rigidifying element)
- 213i: Inner face (rigidifying element)
- 213k: Ridge portion
- 214: Through-opening (rigidifying element)
- 215: Foam body
- 215a-f: Part (foam body)
- 215': Foam component
- 217: First side (foam body)
- 219: Second side (foam body)
- 226': Core
- 260: Recess (foam body)
- 261: Groove (foam body)
- 262: Groove (foam body)
- 264: Through-opening (foam body)
- 271a: Access recess (foam body)
- 271b: Access recess (foam body)
- 273a,b: Region (foam body)

- 310: Fibre composite component
- 311: Skin portion
- 312: Rigidifying element
- 313: Rigidifying element
- 315: Foam body
- 315': Foam component
- 315a-h: Part (foam body)
- 316: Recess
- 317: First side (foam body)
- 319: Second side (foam body)
- 361: Groove (foam body)
- 363: Through-opening (foam body)
- 365: Through-opening (foam body)
- 373a-e: Region (foam body)
- 374a,b: Region (foam body)
- 380: Device
- 381: Support face (device)
- 394: Surface region (foam body)
- 395: Cover layer
- 396: Surface region (rigidifying element)

- 410: Fibre composite component
- 411: Skin portion
- 413: Rigidifying element
- 414: Through-opening (rigidifying element)
- 415: Foam body
- 415': Foam component
- 417: First side (foam body)
- 419: Second side (foam body)
- 472: Recess (foam body)

- 510: Fibre composite component
- 511: Skin portion
- 515: Foam body
- 515a-l: Part (foam body)
- 516: Recess
- 518: Joint
- 520: First semi-finished product or preform
- 540: Second semi-finished product

- 563: Through-opening (foam body)
- 580: Device
- 581: Support face (device)

- 615: Foam body
- 615a,b: Part (foam body)
- 616: Recess
- 617: First side (foam body)
- 618: Joint
- 620: First semi-finished product or preform
- 625: Core
- 640: Second semi-finished product
- 680: Device

- 715: Foam body
- 715a-e: Part (foam body)
- 716: Recess
- 718: Joint
- 763: Through-opening (foam body)
- 764: Through-opening (foam body)
- 780: Device

- 815: Foam body
- 815a-e: Parts (foam body)
- 816: Recess
- 818: Joint
- 850: Internal lining
- 864: Through-opening (foam body)
- 869a: Air-conditioning duct
- 869b: Ventilation outlet
- 870: Separating film
- 875: Recessed grip
- 880: Device

- 915: Foam body
- 915a-c: Part (foam body)
- 916: Recess

- 917: First side (foam body)
- 918: Joint
- 966: Through-opening (foam body)
- 967: Through-opening (foam body)
- 980: Device

- 1015: Foam body
- 1015a,b: Part (foam body)
- 1016: Recess
- 1017: First side (foam body)
- 1019: Second side (foam body)
- 1061: Groove (foam body)
- 1080: Device

- 1115: Foam body
- 1115a,b: Part (foam body)
- 1116: Recess
- 1117: First side (foam body)
- 1118: Joint
- 1120: First semi-finished product or preform
- 1140: Second semi-finished product
- 1185: Device
- 1190: Female shaping tool

- 1215: Foam body
- 1215a,b: Part (foam body)
- 1216: Recess
- 1218: Joint
- 1220: First semi-finished product or preform
- 1225: Core
- 1240: Second semi-finished product
- 1263: Through-opening (foam body)
- 1264: Through-opening (foam body)
- 1268: Line
- 1285: Device
- 1290: Female shaping tool

- 1315: Foam body
- 1315a,b: Part (foam body)
- 1316a: Recess
- 1316a': Planned recess
- 1316b: Recess
- 1317: First side (foam body)
- 1380: Device

- 1415: Foam body
- 1416: Recess
- 1420: First semi-finished product or preform
- 1440: Second semi-finished product
- 1485: Device
- 1490: Female shaping tool
- 1496: Duct (shaping tool)
- 1497: Duct (foam body)

- 1510: Fibre composite component
- 1511: Skin portion
- 1511a: First side (skin portion)
- 1512: Rigidifying element
- 1513: Rigidifying element
- 1515': Foam component
- 1563: Through-opening
- 1568: Line
- 1592: Sub-region (rigidifying element)
- 1593: Sub-region (skin portion)
- 1594: Region (rigidifying element)

- 2101: Aircraft
- 2102: Fuselage (aircraft)
- 2103: Aerofoil (aircraft)
- 2104: Horizontal tail plane (aircraft)
- 2105: Rudder unit (aircraft)
- 2106: Window (aircraft)
- 2107: Door (aircraft)
- 2108: Fuselage section (aircraft)

- x: Longitudinal direction(aircraft)
- y: Wingspan direction (aircraft)
- z: Vertical direction (aircraft)

- F: Milling tool
- U: Circumferential direction (fuselage)

- α: Angle

## Claims

1. Method for manufacturing a fibre composite component (10; 110; 210; 310; 410; 510; 1510), which comprises a skin portion (11; 111; 211; 311; 411; 511; 1511) and a backing structure for rigidifying the skin portion, comprising the steps of:
- preparing and positioning a single-piece foam body or the parts (115a-b; 215a-f; 315a-h; 515a-1; 615a-b; 715a-e; 815a-e; 915a-c; 1015a-b; 1115a-b; 1215a-b; 1315a-b) of a multi-part foam body (115; 215; 315; 415; 515; 615; 715; 815; 915; 1015; 1115; 1215; 1315; 1415), which comprises at least one recess (116; 316; 516; 616; 716; 816; 916; 1016; 1116; 1216; 1316a-b; 1416) which is open towards a first side (117; 217; 317; 417; 617; 917; 1017; 1317; 1417) of the foam body (115... 1415);
- prior to, during or after the positioning of the foam body (115... 1415) or the parts (115a-b... 1315a-b) thereof, arranging a rigidifying element (12; 112; 212, 213; 312, 313; 1512, 1513) for the backing structure or a preform (120; 520; 620; 1120; 1220; 1420) or first semi-finished product (120; 520; 620; 1120; 1220; 1420) for forming the rigidifying element (12... 1513) in the recess (116... 1416) at least in portions, in such a way that the rigidifying element (12... 1513) or preform (120... 1420) or first semi-finished product (115... 1415) is placed against the foam body (115... 1415) at least in portions;
- providing the skin portion (11... 1511) or a second semi-finished product (140; 540; 640; 1140; 1240; 1440) for forming the skin portion (11... 1511) ;
- bringing the skin portion (11... 1511) or second semi-finished product (140... 1440) into contact, in regions, with the foam body (115... 1415) on the first side (117... 1417) thereof and with the rigidifying element (12... 1513) or preform (120... 1420) or first semi-finished product (120... 1420), causing the skin portion (11... 1511) or second semi-finished product (140... 1440) to be placed against the foam body (115... 1415) at least in portions and the rigidifying element (12... 1513) or preform (120... 1420) or first semi-finished product (120... 1420) to be positioned relative to the skin portion (11... 1511) or second semi-finished product (140...) ; and
- further processing the skin portion (11... 1511) or second semi-finished product (140... 1440) and the rigidifying element (12... 1513) or preform (120... 1420) or first semi-finished product (120... 1420) in contact therewith in such a way that a fibre composite component (10... 1510) is obtained in which the skin portion (11... 1511) and the rigidifying element (12... 1513) are interconnected.

2. Method according to claim 1,
**characterised in that**
at least one surface portion (115o) of the foam body (115) on the first side (117) thereof is shaped in a manner corresponding to a shape, predetermined for the finished fibre composite component (110), of a region of the skin portion (111).

3. Method according to either claim 1 or claim 2,
**characterised in that**
the rigidifying element (12... 1513) is arranged in the recess (116... 1416) as a composite component which comprises strengthening fibres, which are embedded in a solidified, in particular cured, matrix material.

4. Method according to any of claims 1 to 3,
**characterised in that**
one or more layers of a fibre formation pre-impregnated with a matrix material with is not cured or not completely cured is arranged in the recess (116... 1216) at least in portions as a first semi-finished product (120... 1220), or
**in that** the preform (120... 1220) is formed using a fibre formation pre-impregnated with a matrix material which is not cured or not completely cured, and is arranged in the recess (116... 1216) at least in portions, or
**in that** one or more layers of a dry fibre formation are arranged in the recess (1416) at least in portions as a first semi-finished product (1420), and the first semi-finished product (1420) is soaked with a curable matrix material by injection during further processing, or **in that** the preform (1420) is formed using a dry fibre formation, the preform (1420) is arranged in the recess (1416) of the foam body at least in portions in a dry state, and the preform is soaked with a curable matrix material by injection during further processing.

5. Method according to any of claims 1 to 4,
**characterised in that**
a fibre formation pre-impregnated with a matrix material which is not cured or not completely cured is brought into contact in regions with the first side (117... 1317) of the foam body (115... 1315) and with the rigidifying element (12... 1513) or preform (120... 1220) or first semi-finished product (120... 1220) as a second semi-finished product (140... 1240), or
**in that** a dry fibre formation is brought into contact in regions with the first side (1417) of the foam body (1415) and with the rigidifying element (1412) or preform (1420) or first semi-finished product (1420) as a second semi-finished product (1440), and the second semi-finished product (1440) is soaked with a curable material by injection during further processing.

6. Method according to either claim 4 or claim 5, **characterised in that** the further processing comprises curing the matrix material of the first semi-finished product (120... 1420) or preform (120... 1420) and/or curing the matrix material of the second semi-finished product (140... 1440), the matrix material in particular being cured under the effect of increased pressure and/or increased temperature.

7. Method according to any of the preceding claims,
**characterised in that** at least part of the foam body (115... 1415) is connected to the skin portion (11... 1511) and/or rigidifying component (12... 1513) during further processing.

8. Method according to any of the preceding claims,
**characterised in that**
the foam body (815) or part (815d) thereof is provided with a separating film (870) in regions on the surface thereof, to prevent the foam body (815) or the part (815d) thereof from connecting to the skin portion and/or the rigidifying element, in particular being glued to the skin portion and/or the rigidifying element.

9. Method according to any of the preceding claims,
**characterised in that**
after the step of further processing, material-removing machining is carried out on the foam body (115... 1415) on a side (119; 219; 319; 419; 1019) of the foam body (115... 1415) remote from the skin portion (11... 1511).

10. Method according to claim 9,
**characterised in that**
the foam body (415) is removed in regions during the material-removing machining in such a way that a recess (472) is formed which reaches as far as the skin portion (411), and **in that** a further rigidifying element (413) is subsequently arranged in the recess and connected to the skin portion (411), in particular by means of additional connection elements.

11. Method according to either claim 9 or claim 10,
**characterised in that**
the foam body (315) is removed in regions during the material-removing machining in such a way that regions (373a-e, 374a-b) of the foam body (315) which are in contact with the skin portion (311) and/or the rigidifying element (312) are left as additional mechanically supporting components of the fibre composite component (310) and/or for acoustically and/or thermally insulating the fibre composite component (310).

12. Method according to any of claims 9 to 11,
**characterised in that**
during the material-removing machining the foam body (115; 215; 315) is provided with at least one recess (160; 260) or at least one groove (161, 162; 261, 262; 361) for receiving non-structural system components of an aircraft or spacecraft (2101), in particular components and/or lines for electrical power supply or data processing or data transfer or lines and/or components of a hydraulic system or an air-conditioning or ventilation system or a fuel system or a water/wastewater system.

13. Method according to any of claims 9 to 12,
**characterised in that**
the foam body (215) is provided, by way of the material-removing machining, with at least one access recess (271a, 271b), which makes access possible to the rigidifying element (212, 213) from the side (219) of the foam body (215) remote from the skin portion (211).

14. Method according to any of the preceding claims,
**characterised in that**
after the further processing, and if material-removing machining is subsequently carried out on the foam body (115) preferably after this machining, an internal lining (50; 150) for an internal region, in particular for a passenger cabin, of an aircraft or spacecraft (2101) is attached, in particular glued flat, to the foam body (115) or to a foam component (15'; 115') formed by regions left behind of the foam body (115).

15. Method according to any of the preceding claims,
**characterised in that**
a material for forming a structurally supporting cover layer (395) is applied to surface regions (394) of the foam body (315) on a side of the foam body (315) remote from the skin portion (311), in particular a fibre formation impregnated with matrix material which is not cured or not completely cured, which is subsequently cured, preferably under the effect of increased pressure and/or increased temperature, to form the structurally supporting cover layer (395).

16. Fibre composite component (10; 110; 210; 310; 410; 510; 1510), in particular a structural component for an aircraft or spacecraft (2101), manufactured by a method according to any of the preceding claims.

17. Structural component (10; 110; 210; 310; 410; 510; 1510) for an aircraft or spacecraft (2101), which can in particular be manufactured by a method according to any of claims 1 to 15,
comprising a skin portion (11; 111; 211; 311; 411; 511; 1511),
comprising a backing structure, which comprises at least one rigidifying element (12, 13; 112, 113; 212, 213; 312, 313; 413; 1512, 1513) for rigidifying the skin portion (11... 1511) and is arranged on a first side (211a; 1511a) of the skin portion (11... 1511), and
comprising a foam component (15'; 115'; 215'; 315'; 415'; 1515') which is arranged on the first side (211a; 1511a) of the skin portion (11... 1511) and connected to the skin portion (11... 1511) or the rigidifying element (12... 1513) or both,
wherein the foam component (15'... 1515') is formed on a side of the foam component (15'... 1515') remote from the skin portion by material-removing processing.
